# EUROPEAN PATENT APPLICATION

(11) **EP 4 787 461 A1**
(43) Date of publication of application: **05.08.2026**
(21) Application number: 24883838.5
(22) Date of filing: 07.05.2024
(51) Int. Cl.: H01M 4/137, H01M 4/525, H01M 4/587, H01M 4/62, H01M 10/05

(54) **POSITIVE ELECTRODE PIECE, BATTERY, AND ELECTRIC DEVICE**

(30) Priority: 03.11.2023 CN 202311460987
(71) Applicant: Contemporary Amperex Technology Co., Limited, Ningde, Fujian 352100 (CN)
(72) Inventor: PENG, Shuangjuan, Ningde, Fujian 352100 (CN); LI, Baiqing, Ningde, Fujian 352100 (CN); PENG, Lin, Ningde, Fujian 352100 (CN); JIN, Haizu, Ningde, Fujian 352100 (CN); ZHAO, Fenggang, Ningde, Fujian 352100 (CN); WU, Kai, Ningde, Fujian 352100 (CN)
(74) Representative: Lorenz Seidler Gossel Part. mbB
(86) International application number: PCT/CN2024/091434
(87) International publication number: WO 2025/091825

(57) **Abstract**

Provided are a positive electrode plate, a battery, and an electric apparatus. The positive electrode plate includes a positive electrode current collector and a positive electrode film layer disposed on at least one side of the positive electrode current collector, where the positive electrode film layer includes a positive electrode active material and a lyophilic polymer, and a coating weight of the positive electrode film layer is ≥300 mg/1540.25 mm².

## Description

### CROSS-REFERENCE TO RELATED APPLICATIONS

The present application claims priority to Chinese Patent Application No. 202311460987.0, filed on November 3, 2023 and entitled "POSITIVE ELECTRODE PLATE, BATTERY, AND ELECTRIC APPARATUS," the entire content of which is incorporated herein by reference.

### TECHNICAL FIELD

The present application relates to a positive electrode plate, a battery, and an electric apparatus.

### BACKGROUND

Batteries, characterized by high capacity and long lifespan, are widely used in electronic devices, such as mobile phones, laptops, electric bicycles, electric vehicles, electric aircraft, electric ships, electric toy cars, electric toy ships, electric toy aircraft, and electric tools.

As the application scope of batteries continues to expand, the requirements for battery performance are becoming increasingly stringent. However, achieving improvements in cycling performance, power performance, and energy density remains challenging and requires further enhancement.

### SUMMARY

The present application is made in view of the above issues, with an aim to provide a positive electrode plate, a battery, and an electric apparatus.

According to a first aspect, an embodiment of the present application provides a positive electrode plate, where the positive electrode plate includes a positive electrode current collector and a positive electrode film layer disposed on at least one side of the positive electrode current collector, the positive electrode film layer includes a positive electrode active material and a lyophilic polymer, and a coating weight of the positive electrode film layer is ≥300 mg/1540.25 mm².

Thus, the positive electrode film layer in the embodiments of the present application has a relatively high coating weight, the battery cell exhibits a high energy density. However, due to the high coating weight and large coating thickness, polarization phenomena in the positive electrode film layer intensify, and the path for lithium ions to intercalate into or deintercalate from the positive electrode active material of the positive electrode film layer is prolonged, resulting in higher internal resistance and poorer power performance and cycle life. In the embodiments of the present application, the lyophilic polymer is further added in the positive electrode film layer, where the lyophilic polymer has high affinity with an electrolyte, enabling an enhanced wetting speed of the electrolyte on the positive electrode film layer, thereby mitigating polarization phenomena and interfacial side reactions in the positive electrode film layer, and improving cycle life. The lyophilic polymer is used to coat the electrolyte on surfaces of particles of the positive electrode active material, so as to form effective electrolyte retention sites on the surfaces of the particles of the positive electrode active material, thereby accelerating a migration speed of lithium ions and improving power performance of the battery cell. Thus, the embodiments of the present application can achieve balanced improvements in cycling performance, power performance, and energy density.

In some embodiments, the coating weight of the positive electrode film layer ranges from 300 mg/1540.25 mm² to 500 mg/1540.25 mm².

In some embodiments, the positive electrode active material includes lithium-containing phosphate; optionally, based on a total mass of the positive electrode active material, a mass content of the lithium-containing phosphate is ≥90%; and further optionally, the coating weight of the positive electrode film layer is ≥400 mg/1540.25 mm², optionally ranging from 400 mg/1540.25 mm² to 500 mg/1540.25 mm². With the lithium-containing phosphate as a primary material of the positive electrode active material, the positive electrode film layer has a relatively high coating weight, and the battery cell exhibits high energy density. The combination of the lithium-containing phosphate and the lithium-containing phosphate enhances cycle life and power performance.

In some embodiments, the lithium-containing phosphate includes at least one of lithium iron phosphate, lithium manganese phosphate, lithium manganese iron phosphate, lithium nickel phosphate, lithium cobalt phosphate, and their respective modified compounds.

In some embodiments, the positive electrode active material includes lithium-containing transition metal oxide; optionally, based on a total mass of the positive electrode active material, a mass content of the lithium-containing transition metal oxide is ≥90%, and further optionally, the coating weight of the positive electrode film layer is ≥300 mg/1540.25 mm², optionally ranging from 300 mg/1540.25 mm² to 500 mg/1540.25 mm². With the lithium-containing transition metal oxide as a primary material of the positive electrode active material, the positive electrode film layer has a relatively high coating weight, and the battery cell exhibits high energy density. The combination of the lithium-containing transition metal oxide and the lithium-containing phosphate enhances cycle life and power performance.

In some embodiments, the lithium-containing transition metal oxide includes at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds.

In some embodiments, based on a total mass of the positive electrode film layer, a mass content of the lyophilic polymer is ≤5%; and optionally, the mass content of the lyophilic polymer is ≤1%. When the mass content of the lyophilic polymer is within the above range, the combination of the lyophilic polymer and the positive electrode active material of a high coating weight, the lyophilic polymer can form multiple electrolyte retention sites on surfaces of particles of the positive electrode active material, enhancing the electrolyte retention capability of the positive electrode film layer and improving wettability of the electrolyte with the positive electrode active material of the positive electrode film layer, thereby helping to improve the cycling performance and power performance of the battery cell.

In some embodiments, the positive electrode film layer includes multiple sublayers, and in a direction from the positive electrode current collector to the positive electrode film layer, coating weights of the multiple sublayers decrease progressively. The use of differentiated coating weights for the multiple sublayers helps mitigate polarization phenomena in the positive electrode film layer, enhancing cycling performance of the battery cell.

In some embodiments, the multiple sublayers include a first layer and a second layer, the first layer being disposed on a surface of the positive electrode current collector, and the second layer being located on a side of the first layer facing away from the positive electrode current collector, where a coating weight of the first layer is greater than a coating weight of the second layer.

In some embodiments, a mass content of the lyophilic polymer in the first layer is greater than a mass content of the lyophilic polymer in the second layer. When the mass content of the lyophilic polymer is within the above range, the lyophilic polymer can form multiple electrolyte retention sites on surfaces of particles of the positive electrode active material in each layer, enhancing the electrolyte retention capability of each layer and improving wettability of the electrolyte with the positive electrode active material of the positive electrode film layer, thereby helping to improve the cycling performance and power performance of the battery cell.

In some embodiments, the lyophilic polymer includes a fluorinated polymer, the fluorinated polymer having a crystallinity measured by differential scanning calorimetry and denoted as Xc₁%, where 0 < Xc₁ ≤ 28; where
a melting temperature of the fluorinated polymer is Tₘ₁°C, where 0 < Tₘ₁ ≤ 130;
further optionally, a glass transition temperature of the fluorinated polymer is T_{g1}°C, where -30 ≤ T_{g1} ≤ 40; and
further optionally, the fluorinated polymer includes at least one of a compound represented by formula (AI) to a compound represented by formula (AIII): 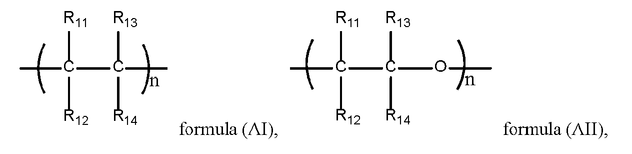
where in formula (AI) and formula (AII), R₁₁, R₁₂, R₁₃, and R₁₄ each independently include a hydrogen atom, a fluorine atom, a chlorine atom, a bromine atom, substituted or unsubstituted C1-C3 alkyl, or substituted or unsubstituted C1-C3 alkoxy, and at least one of R₁₁, R₁₂, R₁₃, and R₁₄ includes a fluorine atom; 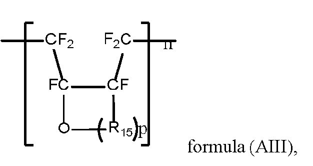
in formula (AIII), R₁₅ includes a single bond or substituted or unsubstituted C1-C3 alkyl;
p is a positive integer selected from 1 to 3; and
n is a positive integer selected from 1000 to 30000.

Thus, with a relatively low crystallinity, melting temperature, or glass transition temperature of the fluorinated polymer in the embodiments of the present application, the fluorinated polymer has a certain degree of mobility above the glass transition temperature, and therefore can buffer external energy through chain segment movement under external forces, exhibiting as a certain flexibility. This can mitigate increased brittleness of the positive electrode plate caused by thick coating and serve as a buffer for the charge-discharge process of the positive electrode active material during cycling of the positive electrode plate, thereby reducing cycling swelling and improving cycling performance.

In some embodiments, the lyophilic polymer includes an ether polymer, the ether polymer is made into a sheet-like structure, a storage modulus G' - loss modulus G" curve of the sheet-like structure is obtained by subjecting it to dynamic frequency sweep testing at (Tₘ₂ + 20)°C, and a slope of the storage modulus G' - loss modulus G" curve is K₁, where 1 < K₁ < ∞, Tₘ₂°C represents the melting temperature of the ether polymer, optionally, 1 < K₁ ≤ 100, and further optionally, 1 < K₁ ≤ 10;
optionally, the glass transition temperature of the ether polymer is T_{g2}°C, where -20 ≤ T_{g2} ≤ 35; and
further optionally, the ether polymer includes at least one of a compound represented by formula (BI) and a compound represented by formula (BII), 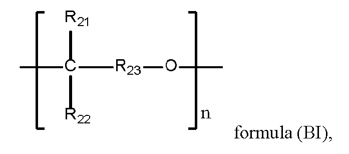
where in formula (BI), R₂₁ and R₂₂ each independently include a hydrogen atom, substituted or unsubstituted C1-C3 alkyl, or substituted or unsubstituted C1-C3 alkoxy; and R₂₃ includes substituted or unsubstituted C1-C5 alkylene; 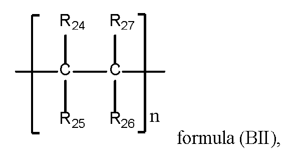
in formula (BII), R₂₄ to R₂₇ each independently include a hydrogen atom, substituted or unsubstituted C1-C3 alkyl, substituted or unsubstituted C1-C3 alkoxy, or an ether group, and at least one of R₂₄ to R₂₇ includes substituted or unsubstituted C1-C3 alkoxy or an ether group; and
a degree of polymerization n of the ether polymer is a positive integer selected from 1500 to 25000.

Thus, when the ether polymer of the present application satisfies the above range, it can further reduce molecular chain entanglement, facilitating the diffusion of solvent molecules in the electrolyte between the molecular chains. Additionally, the ether polymer maintains a certain degree of molecular chain entanglement, capable of effectively storing the electrolyte, and improving the cycling performance of the battery cell.

In some embodiments, the lyophilic polymer includes an ester polymer, the ester polymer is made into a sheet-like structure, a storage modulus G' - loss modulus G" curve of the sheet-like structure is obtained by subjecting it to dynamic frequency sweep testing at (Tₘ₃ + 20)°C, and a slope of the storage modulus G' - loss modulus G" curve is K₂, where 1 < K₂ < ∞, Tₘ₃°C represents the melting temperature of the ester polymer, optionally, 1 < K₂ ≤ 100, and further optionally, 1 < K₂ ≤ 10;
optionally, the glass transition temperature of the ester polymer is T_{g3}°C, where -20 ≤ T_{g3} ≤ 35; and
further optionally, the ester polymer includes at least one of a compound represented by formula (CI) to a compound represented by formula (CIII), 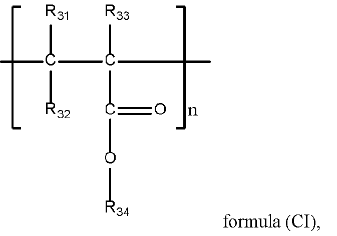
where in formula (CI), R₃₁, R₃₂, and R₃₃ each independently include a hydrogen atom or substituted or unsubstituted C1-C8 alkyl; and R₃₄ includes substituted or unsubstituted C1-C8 alkyl or substituted or unsubstituted C1-C8 hydroxyalkyl; 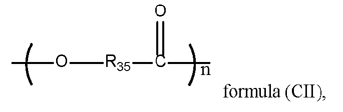
in formula (CII), R₃₅ includes substituted or unsubstituted C2-C6 methylene; and optionally, R₃₅ independently includes substituted or unsubstituted C2-C4 methylene; 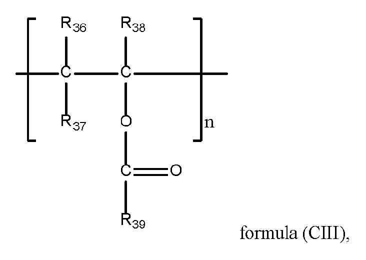
in formula (CIII), R₃₆, R₃₇, and R₃₈ each independently include a hydrogen atom or substituted or unsubstituted C1-C8 alkyl; and R₃₉ includes substituted or unsubstituted C1-C8 alkyl;
optionally, R₃₆, R₃₇, and R₃₈ each independently include a hydrogen atom or substituted or unsubstituted C1-C4 alkyl; and
a degree of polymerization n of the ester polymer is a positive integer selected from 800 to 20000.

Thus, when the ester polymer of the present application satisfies the above range, it can further reduce molecular chain entanglement, facilitating the diffusion of solvent molecules in the electrolyte between the molecular chains. Additionally, the ether polymer maintains a certain degree of molecular chain entanglement, capable of effectively storing the electrolyte, and improving the cycling performance of the battery cell.

In some embodiments, the lyophilic polymer includes an aldehyde-ketone polymer, the aldehyde-ketone polymer is made into a sheet-like structure, a storage modulus G' - loss modulus G" curve of the sheet-like structure is obtained by subjecting it to dynamic frequency sweep testing at (Tₘ₄ + 20)°C, a slope of the storage modulus G' - loss modulus G" curve is K₃, where 0.8 ≤ K₃ < ∞, Tₘ₄°C represents the melting temperature of the aldehyde-ketone polymer, optionally, 0.8 ≤ K₃ ≤ 100, and further optionally, 0.8 ≤ K₃ ≤ 10;
optionally, the glass transition temperature of the aldehyde-ketone polymer is T_{g4}°C, where -20 ≤ T_{g4} ≤ 35; and
further optionally, the aldehyde-ketone polymer includes at least one of a compound represented by formula (DI) and a compound represented by formula (DII), 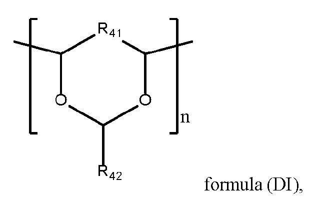
where in formula (DI), R₄₁ includes a single bond or substituted or unsubstituted C1-C6 methylene; and R₄₂ includes a hydrogen atom or substituted or unsubstituted C1-C6 alkyl; 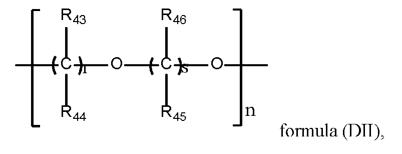
in formula (DII), R₄₃ to R₄₆ each independently include a hydrogen atom, a hydroxyl group, substituted or unsubstituted C1-C3 alkyl, substituted or unsubstituted C1-C3 hydroxyalkyl, or substituted or unsubstituted C1-C3 alkoxy;
r and s are each independently an integer selected from 0 to 5, and at least one of r and s is selected from a positive integer; and
a degree of polymerization n of the aldehyde-ketone polymer is a positive integer selected from 500 to 15000.

Thus, when the aldehyde-ketone polymer of the present application satisfies the above range, it can further reduce molecular chain entanglement, facilitating the diffusion of solvent molecules in the electrolyte between the molecular chains. Additionally, the ether polymer maintains a certain degree of molecular chain entanglement, capable of effectively storing the electrolyte, and improving the cycling performance of the battery cell.

In some embodiments, a molecular weight of the lyophilic polymer ranges from 2.0×10⁵ g/mol to 1.2×10⁶ g/mol.

According to a second aspect, the present application provides a battery, where the battery includes the positive electrode plate according to any embodiment of the first aspect of the present application.

According to a third aspect, the present application provides an electric apparatus including the battery according to the second aspect of the present application.

### BRIEF DESCRIPTION OF DRAWINGS

To more clearly illustrate technical solutions of embodiments of the present application, drawings required for use in the embodiments of the present application are briefly described below. It is apparent that the drawings described below are merely some embodiments of the present application, and those of ordinary skill in the art can obtain other drawings based on these drawings without creative effort.
FIG. 1 is a schematic diagram of an embodiment of a positive electrode plate according to the present application.
FIG. 2 is a schematic diagram of an embodiment of a battery cell according to the present application.
FIG. 3 is an exploded schematic view of the embodiment of the battery cell in FIG. 2.
FIG. 4 is a schematic diagram of an embodiment of a battery module according to the present application.
FIG. 5 is a schematic diagram of an embodiment of a battery pack according to the present application.
FIG. 6 is an exploded schematic view of the embodiment of the battery pack in FIG. 5.
FIG. 7 is a schematic diagram of an embodiment of an electric apparatus that includes a battery cell according to the present application as a power source.

The drawings are not necessarily drawn to actual scale.

Description of reference signs:
1. battery pack; 2. upper case; 3. lower case; 4. battery module;
5. battery cell; 51. housing; 52. electrode assembly;
53. cover plate;
6. electric apparatus;
7. positive electrode plate; 71. positive electrode current collector; 721. first layer; and 722. second layer.

### DESCRIPTION OF EMBODIMENTS

Hereinafter, embodiments specifically disclosing the positive electrode plate, battery, and electric apparatus of the present application are described in detail with appropriate reference to the drawings. However, unnecessary detailed descriptions may be omitted in some cases. For example, detailed descriptions of well-known matters or repetitive descriptions of substantially identical structures may be omitted. This is to avoid unnecessarily verbose descriptions and to facilitate understanding by those skilled in the art. Additionally, the drawings and the following descriptions are provided for those skilled in the art to fully understand the present application and are not intended to limit the subject matter recited in the claims.

The "ranges" disclosed in the present application are defined in the form of lower and upper limits, where a given range is defined by selecting a lower limit and an upper limit, and the selected lower and upper limits define the boundaries of a specific range. Ranges defined in this manner may include or exclude the endpoints and can be arbitrarily combined, meaning any lower limit can be combined with any upper limit to form a range. For example, if ranges of 60 to 120 and 80 to 110 are listed for a specific parameter, it is understood that ranges of 60 to 110 and 80 to 120 are also contemplated. Additionally, if minimum range values of 1 and 2 are listed, and maximum range values of 3, 4, and 5 are listed, the following ranges are all contemplated: 1 to 3, 1 to 4, 1 to 5, 2 to 3, 2 to 4, and 2 to 5. In the present application, unless otherwise specified, the numerical range "a to b" represents an abbreviated representation of any real number combination between a and b, where a and b are both real numbers. For example, the numerical range "0 to 5" means that all real numbers between "0 to 5" have been listed herein, and "0 to 5" is merely an abbreviated representation of these numerical combinations. Additionally, when a parameter is expressed as an integer ≥ 2, it is equivalent to disclosing that the parameter is, for example, the integer 2, 3, 4, 5, 6, 7, 8, 9, 10, 11, 12, and so on.

Unless otherwise specified, all embodiments and optional embodiments of the present application can be combined with each other to form new technical solutions.

Unless otherwise specified, all technical features and optional technical features of the present application can be combined with each other to form new technical solutions.

Unless otherwise specified, all steps of the present application can be performed sequentially or randomly, preferably sequentially. For example, the method includes steps (a) and (b), indicating that the method may include steps (a) and (b) performed sequentially, or steps (b) and (a) performed sequentially. For example, mentioning that the method may further include step (c) indicates that step (c) can be added to the method in any order, for example, the method may include steps (a), (b), and (c), or steps (a), (c), and (b), or steps (c), (a), and (b), and so on.

In the embodiments of the present application, the terms "multiple" and "plurality" refer to two or more.

The term "alkyl" encompasses straight-chain and branched alkyls. For example, an alkyl may be a C1 to C5 alkyl, a C1 to C4 alkyl, a C1 to C3 alkyl, or a C1 to C2 alkyl. In some embodiments, alkyl includes methyl, ethyl, propyl, isopropyl, butyl, isobutyl, and the like. Additionally, an alkyl may be optionally substituted. In case of substitution, the substituent includes a fluorine atom.

The term "alkoxy" refers to a group in which an alkyl is connected to an oxygen atom via a single bond. For example, an alkoxy may be a C1 to C5 alkoxy, a C1 to C3 alkoxy, or a C1 to C2 alkoxy. In some embodiments, alkoxy includes methoxy, ethoxy, propoxy, and the like. Additionally, an alkoxy may be optionally substituted.

The term "halogen atom" refers to a fluorine atom, a chlorine atom, a bromine atom, and the like.

The term "hydrogen" refers to 1H (protium, H), 2H (deuterium, D), or 3H (tritium, T). In various embodiments, "hydrogen" may be 1H (protium, H).

A battery includes an electrode assembly and an electrolyte. The electrode assembly includes a positive electrode plate, a negative electrode plate, and a separator. The positive electrode plate includes a positive electrode film layer containing a positive electrode active material. The positive electrode active material is capable of providing active ions. The negative electrode plate includes a negative electrode film layer containing a negative electrode active material. The separator is disposed between the positive electrode plate and the negative electrode plate, primarily serving to prevent short-circuiting between the positive electrode plate and the negative electrode plate while allowing active ions to pass freely to form a loop. To increase the energy density of the battery, the coating weight of the positive electrode film layer may be increased.

However, as the coating weight increases, polarization phenomena in the positive electrode film layer intensify, significantly deteriorating power performance and cycle life, making it challenging to achieve balanced improvements in cycling performance, power performance, and energy density.

In view of the above issues, the embodiments of the present application provide a positive electrode plate. The positive electrode plate includes a positive electrode current collector and a positive electrode film layer disposed on at least one side of the positive electrode current collector. The positive electrode film layer has a high coating weight, such as ≥300 mg/1540.25 mm², to enhance an energy density of a battery cell. The positive electrode film layer further includes a lyophilic polymer, and the lyophilic polymer has high affinity with the electrolyte, enhancing affinity between the positive electrode plate and the electrolyte and enabling storage of the electrolyte on surfaces of active material particles of the positive electrode plate, thereby improving the electrolyte retention capability of the positive electrode plate. The wettability of the electrolyte with the film layer is significantly enhanced, mitigating concentration polarization phenomena, and when the positive electrode plate is applied in a battery, the power performance and cycle life of the battery are significantly improved.

The technical solutions of the present application are described in detail below.

### Positive electrodeplate

According to a first aspect, the embodiments of the present application provide a positive electrode plate, where the positive electrode plate includes a positive electrode current collector and a positive electrode film layer disposed on at least one side of the positive electrode current collector, the positive electrode film layer includes a positive electrode active material and a lyophilic polymer, and a coating weight of the positive electrode film layer is ≥300 mg/1540.25 mm².

The positive electrode film layer has a relatively high coating weight, and the battery cell exhibits a high energy density. However, due to the high coating weight and large coating thickness, polarization phenomena in the positive electrode film layer intensify, and the path for lithium ions to intercalate into or deintercalate from the positive electrode active material of the positive electrode film layer is prolonged, resulting in higher internal resistance and poorer power performance and cycle life. In the embodiments of the present application, the lyophilic polymer is further added in the positive electrode film layer, where the lyophilic polymer has high affinity with an electrolyte, enabling an enhanced wetting speed of the electrolyte on the positive electrode film layer, thereby mitigating polarization phenomena and interfacial side reactions in the positive electrode film layer, and improving cycle life. The lyophilic polymer is used to coat the electrolyte on surfaces of particles of the positive electrode active material, so as to form effective electrolyte retention sites on the surfaces of the particles of the positive electrode active material, thereby accelerating a migration speed of lithium ions and improving power performance of the battery cell.

Thus, the embodiments of the present application can achieve balanced improvements in cycling performance, power performance, and energy density.

In the embodiments of the present application, the coating weight of the positive electrode film layer has meaning well-known in the art and may be tested using known devices and methods in the art. For example, a positive electrode plate that is coated on one surface and cold-pressed is taken (if the positive electrode plate is coated on two surfaces, one surface of the positive electrode film layer may be wiped off first), and cut into a small disc with an area of S1. The weight of the disc is measured and recorded as M1. The positive electrode film layer of the weighed positive electrode plate is then wiped off, and the weight of the positive electrode current collector is measured and recorded as M0. Coating weight of positive electrode active material layer = (weight of positive electrode plate M1 - weight of positive electrode current collector M0)/S1.

In the embodiments of the present application, the coating weight of the positive electrode film layer is high, such as ≥300 mg/1540.25 mm²; optionally ranging from 300 mg/1540.25 mm² to 500 mg/1540.25 mm². The coating weight of the positive electrode film layer may be 300 mg/1540.25 mm², 310 mg/1540.25 mm², 320 mg/1540.25 mm², 330 mg/1540.25 mm², 340 mg/1540.25 mm², 350 mg/1540.25 mm², 360 mg/1540.25 mm², 370 mg/1540.25 mm², 380 mg/1540.25 mm², 390 mg/1540.25 mm², 400 mg/1540.25 mm², 410 mg/1540.25 mm², 420 mg/1540.25 mm², 430 mg/1540.25 mm², 440 mg/1540.25 mm², 450 mg/1540.25 mm², 460 mg/1540.25 mm², 470 mg/1540.25 mm², 480 mg/1540.25 mm², 490 mg/1540.25 mm², 500 mg/1540.25 mm², or a range formed by any two of these values.

In some embodiments, the positive electrode active material may include, but is not limited to, at least one of lithium-containing phosphate, lithium-containing transition metal oxide, and their respective modified compounds. The modified compounds may be modified by doping or coating, where doping modification may involve adding doping elements such as transition metals in a compound, and coating modification may involve surface coating with materials such as carbon to form a carbon coating layer on an outer surface of particles.

In the embodiments of the present application, when a mass content of the lithium-containing phosphate is ≥90% based on a total mass of the positive electrode active material, the lithium-containing phosphate serves as a primary material of the positive electrode active material, and the positive electrode active material is defined herein as a lithium-containing phosphate system. In this case, the mass content of the lithium-containing phosphate may reach 100%.

Examples of the lithium-containing phosphate may include, but are not limited to, at least one of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, lithium nickel phosphate, lithium cobalt phosphate, and their respective modified compounds.

In some embodiments, the lithium-containing phosphate includes a compound represented by a molecular formula LₓA_{y}MeₐM_{b}P_{1-c}X_{c}Y_{z} and its modified compounds, where 0.5 ≤ x ≤ 1.3, 0 ≤ y ≤ 1.3, and 0.9 ≤ x + y ≤ 1.3; 0.9 ≤ a ≤ 1.5, 0 ≤ b ≤ 0.5, and 0.9 ≤ a + b ≤ 1.5; and 0 ≤ c ≤ 0.5; 3 ≤ z ≤ 5. L includes one or more of Li and Na. A includes one or more of Na, K, and Mg. Me includes one or more of Mn, Fe, Co, and Ni. M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce. X includes one or more of S, Si, Cl, B, C, and N. Y includes one or more of O and F. For example, the lithium-containing phosphate includes one or more of LiFePO₄, LiMnPO₄, LiFe_{0.5}Mn_{0.5}PO₄, LiFe_{0.6}Mn_{0.4}PO₄, LiFe_{0.7}Mn_{0.3}PO₄, LiNiPO₄, and LiCoPO₄.

In some embodiments, when the positive electrode active material is a lithium-containing phosphate system, the coating weight of the positive electrode film layer is ≥400 mg/1540.25 mm², optionally, 400 mg/1540.25 mm² to 500 mg/1540.25 mm².

When the lithium-containing phosphate serves as a primary material of the positive electrode active material, combined with a high coating weight, the energy density of the battery cell is improved and the cycling performance thereof can also be significantly enhanced. With the combination use of the lithium-containing phosphate and the lyophilic polymer, the lyophilic polymer can form electrolyte retention sites on surfaces of the lithium-containing phosphate material, effectively improving wettability of the electrolyte with the lithium-containing phosphate material, thereby further enhancing cycling performance and power performance of the battery cell.

In the embodiments of the present application, when a mass content of the lithium-containing transition metal oxide is ≥90% based on a total mass of the positive electrode active material, the lithium-containing transition metal oxide serves as a primary material of the positive electrode active material, and the positive electrode active material is defined herein as a lithium-containing transition metal oxide system. In this case, the mass content of the lithium-containing transition metal oxide may reach 100%.

Examples of the lithium-containing transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds.

In some embodiments, the lithium-containing transition metal oxide includes a compound represented by a molecular formula LₓA_{y}NiₐCo_{b}Mn_{c}M_{(1-a-b-c)}Y_{z} and its modified compounds, where 0.5 ≤ x ≤ 2.1, 0 ≤ y ≤ 2.1, and 0.9 ≤ x + y ≤ 2.1; 0 ≤ a ≤ 1, 0 ≤ b ≤ 1, 0 ≤ c ≤ 1, and 0.1 ≤ a + b + c ≤ 1; and 1.8 ≤ z ≤ 3.5. L includes one or more of Li and Na. A includes one or more of Na, K, and Mg. M includes one or more of B, Mg, Al, Si, S, Ca, Sc, Ti, V, Cr, Fe, Cu, Zn, Sr, Y, Zr, Nb, Mo, Cd, Sn, Sb, Te, Ba, Ta, W, Yb, La, and Ce. Y includes one or more of O and F. For example, the lithium-containing transition metal oxide includes at least one of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), and LiNi_{0.85}Co_{0.15}Al_{0.05}O₂.

During the charge-discharge process of the battery cell, active ions such as Li undergo intercalation and deintercalation, and the molar content of Li varies when the battery cell is discharged to different states. In the embodiments of the present application, regarding the listing of positive electrode active materials, the molar content of Li refers to the initial state of the material, that is, before feeding, and the molar content of Li may change after charge-discharge cycles when the positive electrode active material is applied to a battery system.

In the embodiments of the present application, regarding the listing of positive electrode active materials, the molar content of oxygen (O) is only a theoretical value, and lattice oxygen release may cause changes in the molar content of oxygen (O), resulting in actual fluctuations in the molar content of oxygen (O).

In some embodiments, when the positive electrode active material is a lithium-containing transition metal oxide system, the coating weight of the positive electrode film layer is ≥300 mg/1540.25 mm², optionally, 300 mg/1540.25 mm² to 400 mg/1540.25 mm².

When the lithium-containing transition metal oxide serves as a primary material of the positive electrode active material, combined with a high coating weight, the energy density of the battery cell can be improved. With the combination use of the lithium-containing transition metal oxide and the lyophilic polymer, the lyophilic polymer can form electrolyte retention sites on surfaces of the lithium-containing transition metal oxide material, effectively improving wettability of the electrolyte with the lithium-containing transition metal oxide material, thereby further enhancing cycling performance and power performance of the battery cell. The lyophilic polymer adheres to surfaces of the lithium-containing transition metal oxide material, enhancing structural stability of the lithium-containing transition metal oxide material to a certain extent and reducing a risk of structural collapse of the lithium-containing transition metal oxide material, thereby further improving cycling performance of the battery cell.

The positive electrode film layer is a layered structure, which may be a single-layer structure or a multi-layer structure. When the positive electrode film layer is a multi-layer structure, the positive electrode film layer may include multiple sublayers, such as two sublayers, three sublayers, four sublayers, and five sublayers. The types of positive electrode active materials in all sublayers of the multiple sublayers may be the same or different. The mass contents of the positive electrode active materials in all sublayers may be the same or different. The coating weight of all sublayers may be the same or different.

In some embodiments, in a direction from the positive electrode current collector to the positive electrode film layer, coating weights of the multiple sublayers decrease progressively. This can be understood as follows: a sublayer closest to the positive electrode current collector has the highest coating weight, and a sublayer farthest from the positive electrode current collector has the lowest coating weight. The progressive decrease may follow a linear decrease or a gradient decrease. For example, when the multiple sublayers include three or more sublayers, the coating weights of the multiple sublayers may satisfy a linear relationship or a gradient decrease relationship.

The multiple sublayers can be provided through multi-layer coating. This helps to achieve thick coating. The use of differentiated coating weights for the multiple sublayers, particularly with the coating weights of the multiple sublayers decreasing progressively, can enable lithium ions to migrate quickly from a sublayer farthest from the positive electrode current collector to a sublayer closest to the positive electrode current collector, helping to mitigate polarization phenomena in the positive electrode film layer and enhance cycling performance of the battery cell.

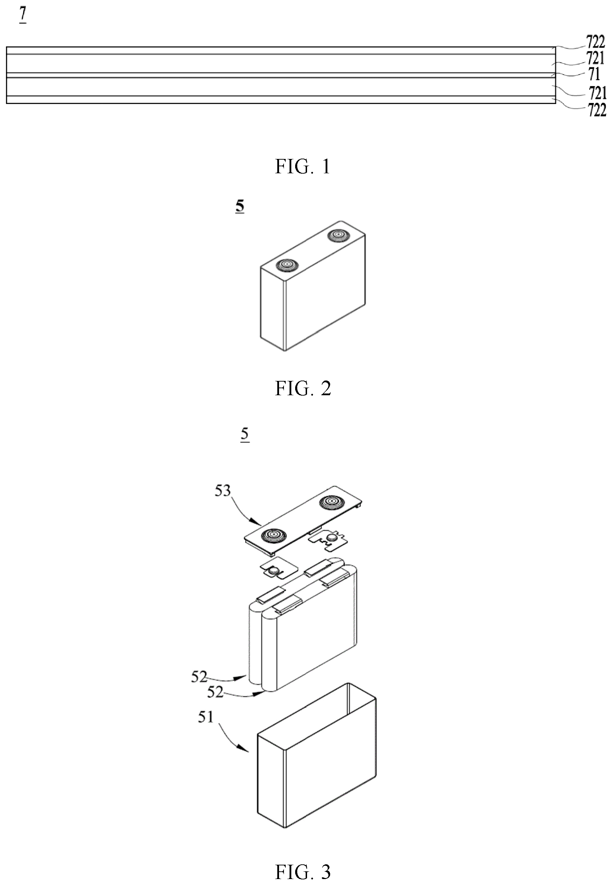

As shown in FIG. 1, for example, a positive electrode plate 7 includes a positive electrode current collector 71 and positive electrode film layers disposed on two surfaces of the positive electrode current collector 71. The positive electrode film layer includes multiple sublayers, and the multiple sublayers includes a first layer 721 and a second layer 722. The first layer 721 is disposed on a surface of the positive electrode current collector 71, and the second layer 722 is located on a side of the first layer 721 facing away from the positive electrode current collector 71. A coating weight of the first layer 721 is greater than a coating weight of the second layer 722. Disposing the first layer 721 and the second layer 722 in a double-layer coating form helps to achieve thick coating. The use of differentiated coating weights for the multiple sublayers, with the coating weight of the first layer 721 being greater than the coating weight of the second layer 722, helps to mitigate polarization phenomena in the positive electrode film layer, enhancing cycling performance of the battery cell.

In some embodiments, based on a total mass of the positive electrode film layer, a mass content of the lyophilic polymer is >0% and the mass content of the lyophilic polymer is ≤5%. Optionally, the mass content of the lyophilic polymer is ≤1%. When the mass content of the lyophilic polymer is within the above range, with the cooperation of the lyophilic polymer and the positive electrode active material of a high coating weight, the lyophilic polymer can form multiple electrolyte retention sites on surfaces of particles of the positive electrode active material, enhancing the electrolyte retention capability of the positive electrode film layer and improving wettability of the electrolyte with the positive electrode active material of the positive electrode film layer, thereby helping to improve the cycling performance and power performance of the battery cell.

For example, the mass content of the lyophilic polymer may be 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, or a range formed by any two of these values.

In the embodiments of the present application, the mass content of the polymer has a meaning well-known in the art and can be tested using devices and methods well-known in the art. For example, it can be tested using thermogravimetric analysis TGA in accordance with JYT014-1996. Specifically, based on the mass loss of the plate during the heating process, a mass-temperature curve, that is, a TG curve, is drawn, and the mass loss corresponding to the polymer decomposition temperature is read as the total mass of the polymer in the plate. This is used to calculate the mass content and coating weight of the polymer. During the test, the following heating process can be used in a nitrogen atmosphere: 5°C/min, RT to 500°C; 10°C/min, 500 to 600°C; and hold at 600°C for 10 min. The end.

When the positive electrode film layer includes multiple sublayers, a mass content of the lyophilic polymer in each sublayer is >0% and the mass content of the lyophilic polymer in each sublayer is ≤5%, optionally ≤1%, and further optionally ≤0.5%. The mass content of the lyophilic polymer in the sublayer may increase correspondingly with the coating weight of the sublayer. When the mass content of the lyophilic polymer is within the above range, the lyophilic polymer can form multiple electrolyte retention sites on surfaces of particles of the positive electrode active material in each layer, enhancing the electrolyte retention capability of each layer and improving wettability of the electrolyte with the positive electrode active material of the positive electrode film layer, thereby helping to improve the cycling performance and power performance of the battery cell.

For example, the mass content of the lyophilic polymer in each sublayer may be 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, or a range formed by any two of these values.

In some embodiments, the lyophilic polymer may include at least one of a fluorinated polymer, an ether polymer, an ester polymer, and an aldehyde-ketone polymer. The lyophilic polymer is configured to encapsulate the electrolyte on the surface of the active material, forming effective electrolyte storage points on the surface of the active material, and enhancing the electrolyte retention capability of the electrode plate. The specific types of lyophilic polymers are described below.

Fluorinated polymer

In some embodiments, the lyophilic polymer may include a fluorinated polymer.

In some embodiments, the fluorinated polymer has a crystallinity measured by differential scanning calorimetry and denoted as X_{c1}%, where 0 < X_{c1} ≤ 28.

In some embodiments, the melting temperature of the fluorinated polymer is Tₘ₁°C, where 0 < Tₘ₁ ≤ 130.

In some embodiments, the glass transition temperature of the fluorinated polymer is T_{g1}°C, where -30 ≤ T_{g1} ≤ 40.

Crystallization refers to the process in which atoms, ions, or molecules in a material are arranged in a certain spatial order to form an ordered structure. The conformation of the lyophilic polymer during crystallization is determined by both intramolecular and intermolecular factors, with intermolecular forces affecting the packing density between molecular chains. The crystallinity X_{c1} is used to characterize the degree of crystallization in a material, and can be measured using differential scanning calorimetry DSC. Specifically, the test procedure is as follows: take a sample of 0.5 g to 0.8 g, place the sample in a sample crucible, and subject it to heating and cooling in a nitrogen atmosphere at a heating rate of 10°C/min from an initial temperature 20°C below the material's intrinsic T_{g1}°C to a final temperature 20°C above the material's intrinsic Tₘ₁°C, and determine the actual glass transition temperature T_{g1}°C, melting temperature Tₘ₁°C, and the like of the material based on the exothermic or endothermic peaks or transition points during the process.

Thus, with a relatively low crystallinity, melting temperature, or glass transition temperature of the fluorinated polymer, the fluorinated polymer has a certain degree of mobility above the glass transition temperature, and therefore can buffer external energy through chain segment movement under external forces, exhibiting as a certain flexibility. This can mitigate increased brittleness of the positive electrode plate caused by thick coating and serve as a buffer for the charge-discharge process of the positive electrode active material during cycling of the positive electrode plate, thereby reducing cycling swelling and improving cycling performance.

For example, the crystallinity of the fluorinated polymer measured by differential scanning calorimetry may be 5%, 10%, 15%, 20%, 25%, 28%, or a range composed of any two of the above values.

For example, the melting temperature of the fluorinated polymer may be 10°C, 20°C, 50°C, 70°C, 90°C, 100°C, 120°C, 130°C, or a range composed of any two of the above values.

For example, the glass transition temperature of the fluorinated polymer may be -30°C, -25°C, -20°C, -15°C, - 10°C, -5°C, 0°C, 5°C, 10°C, 15°C, 20°C, 25°C, 30°C, 35°C, 40°C, or a range composed of any two of the above values.

In some embodiments, the fluorinated polymer includes at least one of a compound represented by formula (AI) to a compound represented by formula (AII), 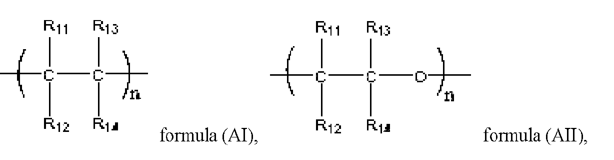 where in formula (AI) and formula (AII), R₁₁, R₁₂, R₁₃, and R₁₄ each independently include a hydrogen atom, a fluorine atom, a chlorine atom, substituted or unsubstituted alkyl, or substituted or unsubstituted alkoxy, and at least one of R₁₁, R₁₂, R₁₃, and R₁₄ includes a fluorine atom.

Optionally, R₁₁, R₁₂, R₁₃, and R₁₄ each independently include a hydrogen atom, a fluorine atom, a chlorine atom, substituted or unsubstituted C1-C10 alkyl, or substituted or unsubstituted C1-C10 alkoxy.

Optionally, R₁₁, R₁₂, R₁₃, and R₁₄ each independently include a hydrogen atom, a fluorine atom, a chlorine atom, substituted or unsubstituted C1-C3 alkyl, or substituted or unsubstituted C1-C3 alkoxy.

Further optionally, R₁₁, R₁₂, R₁₃, and R₁₄ each independently include a hydrogen atom, a fluorine atom, a chlorine atom, methyl, fluoromethyl, methoxy, or perfluoromethoxy.

In some embodiments, the degree of polymerization n of the fluorinated polymer is a positive integer selected from 1000 to 30000, for example, 1000, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, or a range composed of any two of the above values.

Optionally, in case of substitution, the substituent may include one or more of a cyano group (-CN), a nitro group, a sulfonic acid group, a sulfonyl group, an amide, a carboxyl group, an ester group, or a halogen atom. The halogen atom may include a fluorine atom, a bromine atom, or the like, optionally a fluorine atom.

In some embodiments, the fluorinated polymer includes at least one of a compound represented by formula (AIII), 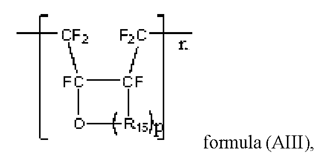 where in formula (AIII), R₁₅ includes a single bond or substituted or unsubstituted alkyl, and in case of substitution, the substituent includes a fluorine atom.

In some embodiments, in case of substitution, the substituent may include one or more of a cyano group (-CN), a nitro group, a sulfonic acid group, a sulfonyl group, an amide, a carboxyl group, an ester group, or a halogen atom.

Optionally, R₁₅ includes a single bond or substituted or unsubstituted C1-C3 alkyl.

In some embodiments, p is a positive integer selected from 1 to 3, for example, 1, 2, or 3.

In some embodiments, the degree of polymerization n of the fluorinated polymer is a positive integer selected from 1000 to 30000, for example, 1000, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, or a range composed of any two of the above values.

In some embodiments, the fluorinated polymer includes at least one of a compound represented by formula (AI-1) to a compound represented by formula (AI-11),

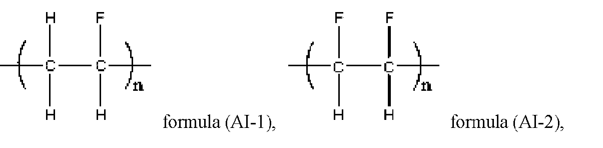

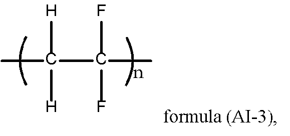

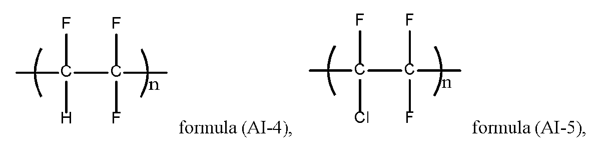

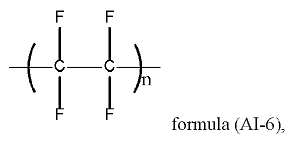

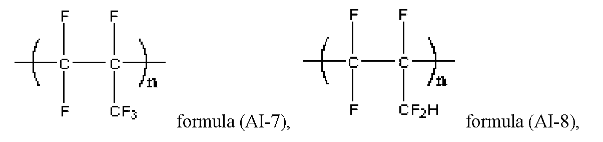

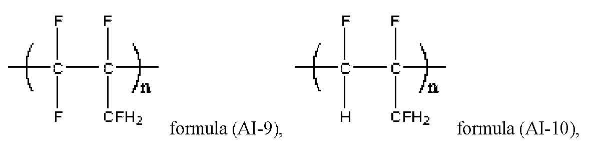

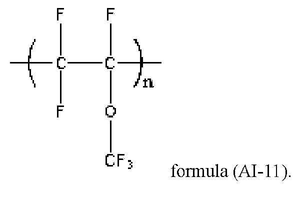

In some embodiments, the fluorinated polymer includes at least one of a compound represented by formula (AII-1) to a compound represented by formula (AII-5),

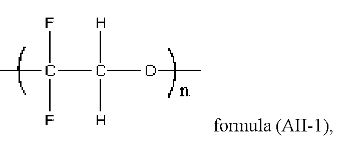

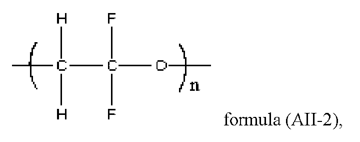

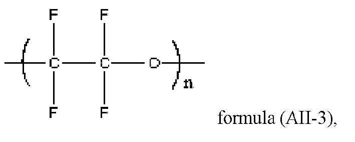

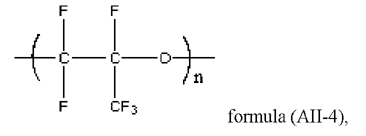

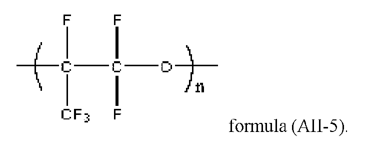

In some embodiments, the fluorinated polymer includes at least one of a compound represented by formula (AIII-1) to a compound represented by formula (AIII-3),

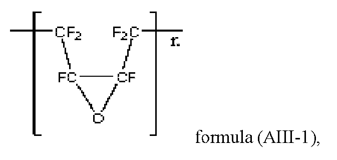

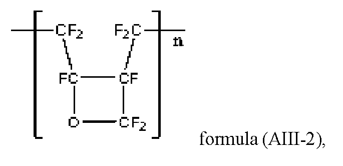

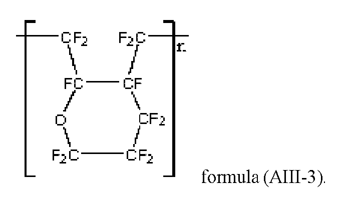

For example, the fluorinated polymer includes one or more of polytetrafluoroethylene PTFE, polyvinylidene fluoride PVDF, fluorinated ethylene propylene copolymer FEP, perfluoroalkoxy polymer PFA, perfluoropolyether PFPE, polyvinylidene fluoride-hexafluoropropylene copolymer PVDF-HFP, polyvinylidene fluoride-trifluoroethylene copolymer PVDF-TrFE, and perfluoro(1-butenyl vinyl ether) polymer (perfluoro(1-butenyl vinyl ether) polymer, CYTOP for short).

Optionally, the fluorinated polymer includes one or more of polytetrafluoroethylene PTFE, polyvinylidene fluoride PVDF, fluorinated ethylene propylene copolymer FEP, polyvinylidene fluoride-hexafluoropropylene copolymer PVDF-HFP, and polyvinylidene fluoride-trifluoroethylene copolymer PVDF-TrFE.

The above fluorinated polymers may be derived from one or more of the following monomers: fluorinated ethylene, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, and pentafluoropropylene. Optionally, the above fluorinated polymers may be derived from at least two of the following monomers: fluorinated ethylene, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, and pentafluoropropylene.

In the embodiments of the present application, the polymer may also be obtained by copolymerizing the above structural groups with a small amount of other types of structural groups (compounds such as olefin compounds, ester monomers, nitrile monomers such as acrylonitrile, amide monomers such as acrylamide, or compounds such as acrylic acid). These small amounts of monomers have relatively poor lyophilic properties, and copolymerizing the monomers of the above fluorinated polymers with these monomers can improve the swelling rate and compressive modulus of the lyophilic polymer.

In some embodiments, the molecular weight of the lyophilic polymer is from 2×10⁵ g/mol to 1.2×10⁶ g/mol.

For example, the molecular weight of the lyophilic polymer may be 2×10⁵ g/mol, 5×10⁵ g/mol, 8×10⁵ g/mol, 1×10⁶ g/mol, 1.2×10⁶ g/mol, or a range composed of any two of the above values.

### Ether polymer

In some embodiments, the lyophilic polymer includes an ether polymer.

In some embodiments, the ether polymer is made into a sheet-like structure, a storage modulus G' - loss modulus G" curve of the sheet-like structure is obtained by subjecting it to dynamic frequency sweep testing at (Tₘ₂ + 20)°C, and a slope of the storage modulus G' - loss modulus G" curve is K₁, where 1 < K₁ < ∞, and Tₘ₂°C represents the melting temperature of the ether polymer.

Specifically, the preparation process of the sheet-like structure is as follows: the ether polymer is vacuum-dried at 80°C for 12 h. The dried ether polymer is hot-pressed into a thin sheet using a flat vulcanizing machine, with the hot-pressing temperature set to (Tₘ₂ + 20)°C, the calendering thickness set to 1-2 min, the calendering time set to 2 min, and the pressure set to 8 MPa. After calendering for 2 min, the sample is taken out and placed on another vulcanizing machine of the same model for cold pressing, with the cold-pressing pressure set to 10 MPa. Using a circular mold with a diameter of 25 mm, a polymer disc (sheet-like structure) of a fixed size can be obtained. For example, the sheet-like structure may be a disc with a thickness of 1-2 mm and a diameter of 25 mm; it can also be prepared according to the sample standards required by the testing equipment.

According to the conclusions of classical linear viscoelasticity, for polymers, especially linear polymers, in the terminal region of the storage modulus G' - loss modulus G" curve (the range approaching the maximum angular velocity), the storage modulus G' - loss modulus G" exhibits frequency dependence, and the longest chain of the polymer plays a role in viscoelastic behavior.

The specific steps of the dynamic frequency sweep test are as follows: a TA-AR2000EX rotational rheometer (TA Instruments, USA) is used for dynamic frequency sweep testing, with a parallel plate diameter of 25 mm and a thickness of 0.9 mm. To ensure testing in the linear viscoelastic region, the strain during the dynamic frequency sweep test is 2%, the test temperature is Tₘ₂ + 20°C, and the frequency sweep range is: 500 rad/s ≤ w² ≤ 0.05 rad/s, to obtain data in the low-frequency region as much as possible.

The dynamic frequency sweep test can characterize the degree of molecular chain entanglement in the solid-phase melt (melt state). Compared to linear structures or short-branched structures, long-branched structures, network structures, and low-crosslinked structures have a high degree of entanglement, exhibiting deviation from linear terminal behavior, and the ether polymer exhibits solid-phase behavior. When the ether polymer of the present application satisfies the above range, it can further reduce molecular chain entanglement, facilitating the diffusion of solvent molecules in the electrolyte between the molecular chains. Additionally, the ether polymer maintains a certain degree of molecular chain entanglement, capable of effectively storing the electrolyte, and improving the cycling performance of the battery cell.

In some embodiments, 1 < K₁ ≤ 100, optionally, 1 < K₁ ≤ 10. For example, K₁ may be 1.01, 1.1, 2, 5, 10, 15, 20, 30, 50, 100, 200, 500, 1000, 5000, 10000, or a range composed of any two of the above values.

In some embodiments, the glass transition temperature of the ether polymer is T_{g2}°C, -20 ≤ T_{g2} ≤ 35. For example, the glass transition temperature of the ether polymer may be -20°C, -15°C, -10°C, -5°C, -0°C, 5°C, 10°C, 15°C, 20°C, 25°C, 30°C, 35°C, or a range composed of any two of the above values. The ether polymer has certain mobility above the glass transition temperature, and therefore can buffer external energy through chain segment motion under external force, exhibiting certain flexibility. This can mitigate increased brittleness of the positive electrode plate caused by thick coating and serve as a buffer for the charge-discharge process of the positive electrode active material during cycling of the positive electrode plate, thereby reducing cycling swelling and improving cycling performance.

In some embodiments, the ether polymer includes a compound represented by formula (BI), 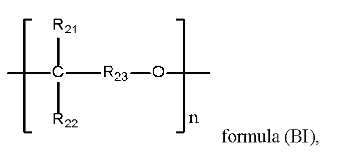 where in formula (BI), R₂₁ and R₂₂ each independently include a hydrogen atom, substituted or unsubstituted alkyl, or substituted or unsubstituted alkoxy, and R₂₃ includes a single bond or substituted or unsubstituted methylene.

Optionally, R₂₁ and R₂₂ each independently include a hydrogen atom, substituted or unsubstituted C1-C10 alkyl, or substituted or unsubstituted C1-C10 alkoxy.

Optionally, R₂₁ and R₂₂ each independently include a hydrogen atom, substituted or unsubstituted C1-C3 alkyl, or substituted or unsubstituted C1-C3 alkoxy.

Optionally, R₂₃ includes a single bond or substituted or unsubstituted C1-C10 methylene.

Optionally, R₂₃ includes a single bond or substituted or unsubstituted C1-C5 methylene.

For example, the ether polymer includes at least one of a compound represented by formula (BI-1) to a compound represented by formula (BI-8),

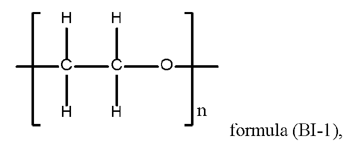

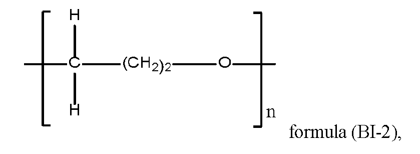

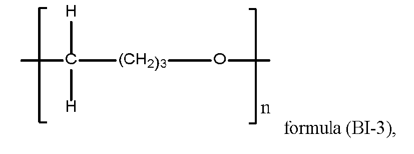

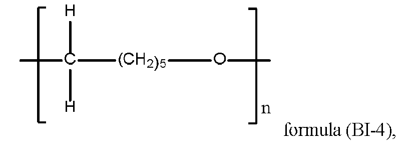

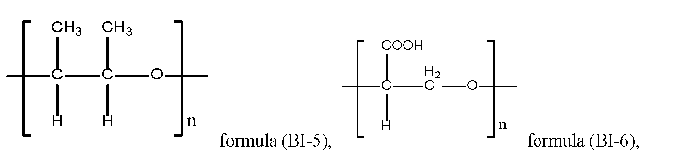

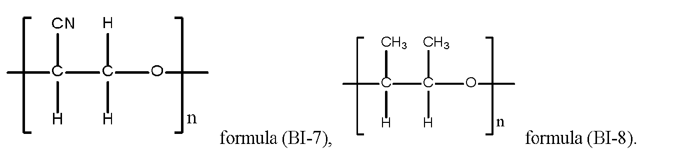

In some embodiments, the ether polymer includes a compound represented by formula (BII), 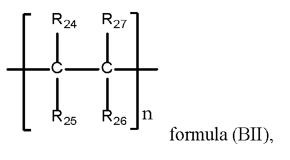 where in formula (BII), R₂₄ to R₂₇ each independently include a hydrogen atom, substituted or unsubstituted alkyl, substituted or unsubstituted alkoxy, or an ether group, and at least one of R₂₄ to R₂₇ includes substituted or unsubstituted alkoxy or an ether group.

Optionally, R₂₄ to R₂₇ each independently include a hydrogen atom, substituted or unsubstituted C1-C10 alkyl, substituted or unsubstituted C1-C10 alkoxy, or an ether group.

Optionally, R₂₄ to R₂₇ each independently include a hydrogen atom, substituted or unsubstituted C1-C3 alkyl, substituted or unsubstituted C1-C3 alkoxy, or an ether group.

In some embodiments, the ether polymer includes at least one of a compound represented by formula (BII-1) to a compound represented by formula (BII-7),

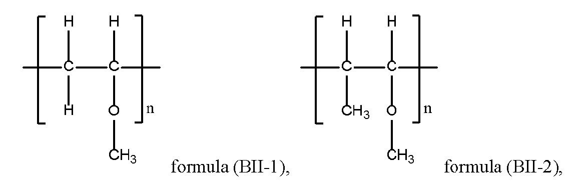

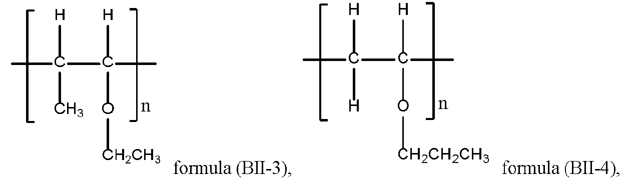

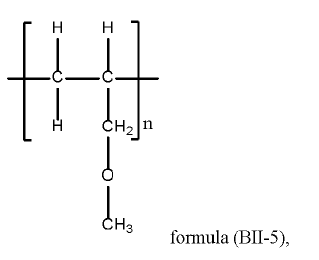

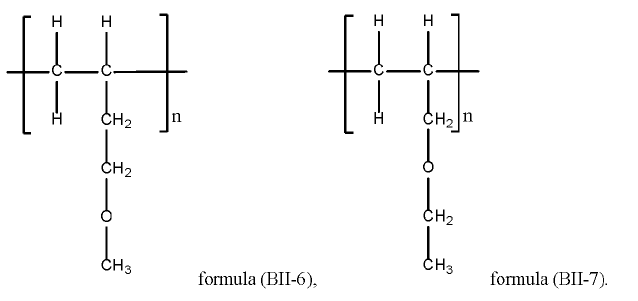

The above polymers are only examples of the structural groups of the main molecular chain. In the embodiments of the present application, the polymer may also be obtained by copolymerizing the above structural groups with a small amount of other types of structural groups (compounds such as olefin compounds, ester monomers, nitrile monomers such as acrylonitrile, amide monomers such as acrylamide, or compounds such as acrylic acid).

When the above groups are substituted, the substituent may include one or more of a cyano group (-CN), a nitro group, a sulfonic acid group, a sulfonyl group, an amide, a carboxyl group, an ester group, or a halogen atom. The halogen atom may include at least one of a fluorine atom or a bromine atom; optionally, a fluorine atom.

In some embodiments, the degree of polymerization n of the ether polymer is a positive integer selected from 1500 to 25000, for example, 1500, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, or a range composed of any two of the above values.

Optionally, the degree of polymerization n of the ether polymer is a positive integer selected from 3000 to 18000.

In some embodiments, the molecular weight of the lyophilic polymer is from 2×10⁵ g/mol to 1.2×10⁶ g/mol. For example, the molecular weight of the polymer may be 2×10⁵ g/mol, 5×10⁵ g/mol, 8×10⁵ g/mol, 1×10⁶ g/mol, 1.2×10⁶ g/mol, or a range composed of any two of the above values.

### Ester polymer

In some embodiments, the lyophilic polymer includes an ester polymer.

In some embodiments, the ester polymer is made into a sheet-like structure; a storage modulus G' - loss modulus G" curve of the sheet-like structure is obtained by subjecting it to dynamic frequency sweep testing at (Tₘ₃ + 20)°C, and a slope of the storage modulus G' - loss modulus G" curve is K₂, where 1 < K₁ < ∞, and Tₘ₃°C represents the melting temperature of the ester polymer.

Specifically, the preparation process of the sheet-like structure is the same as that for the ether polymer and is not repeated here. When the ester polymer of the present application satisfies the above range, it can further reduce molecular chain entanglement, facilitating the diffusion of solvent molecules in the electrolyte between the molecular chains. Additionally, the ester polymer maintains a certain degree of molecular chain entanglement, capable of effectively storing the electrolyte, and improving the cycling performance of the battery cell.

In some embodiments, 1 < K₂ ≤ 100, optionally, 1 < K₂ ≤ 10. For example, K₂ may be 1.01, 1.1, 2, 5, 10, 15, 20, 30, 50, 100, 200, 500, 1000, 5000, 10000, or a range composed of any two of the above values.

In some embodiments, the glass transition temperature of the ester polymer is T_{g3}°C, where -20 ≤ T_{g3} ≤ 35. For example, the glass transition temperature of the ester polymer may be -20°C, -15°C, -10°C, -5°C, -0°C, 5°C, 10°C, 15°C, 20°C, 25°C, 30°C, 35°C, or a range composed of any two of the above values. The ester polymer has certain mobility above the glass transition temperature, and therefore can buffer external energy through chain segment motion under external force, exhibiting certain flexibility. This can mitigate increased brittleness of the positive electrode plate caused by thick coating and serve as a buffer for the charge-discharge process of the positive electrode active material during cycling of the positive electrode plate, thereby reducing cycling swelling and improving cycling performance

In some embodiments, the ester polymer includes a compound represented by formula (CI), 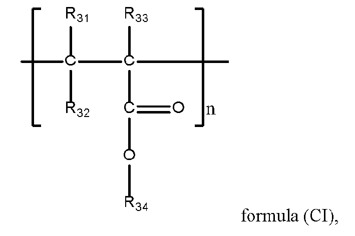 where in formula (CI), R₃₁, R₃₂, and R₃₃ each independently include a hydrogen atom or substituted or unsubstituted alkyl; and R₃₄ includes substituted or unsubstituted alkyl or substituted or unsubstituted hydroxyalkyl.

Optionally, R₃₁, R₃₂, and R₃₃ each independently include a hydrogen atom or substituted or unsubstituted C1-C10 alkyl.

Optionally, R₃₁, R₃₂, and R₃₃ each independently include a hydrogen atom or substituted or unsubstituted C1-C8 alkyl.

In some embodiments, R₃₄ includes substituted or unsubstituted C1-C10 alkyl or substituted or unsubstituted C1-C10 hydroxyalkyl.

In some embodiments, R₃₄ includes substituted or unsubstituted C1-C8 alkyl or substituted or unsubstituted C1-C8 hydroxyalkyl.

In some embodiments, R₃₁ includes a hydrogen atom or substituted or unsubstituted methyl.

In some embodiments, R₃₂ and R₃₃ each independently include a hydrogen atom.

For example, the ester polymer includes at least one of a compound represented by formula (CI-1) to a compound represented by formula (CI-15),

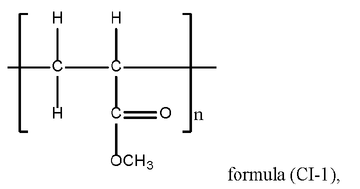

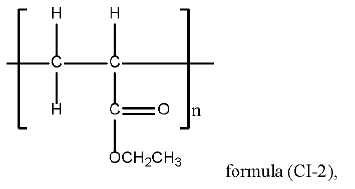

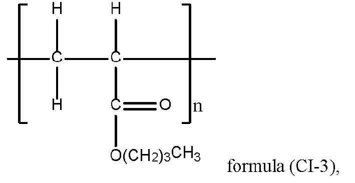

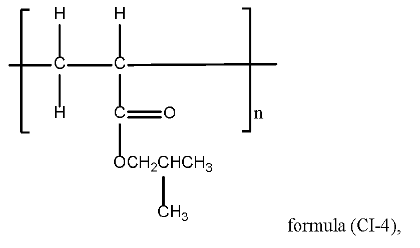

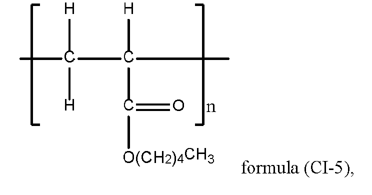

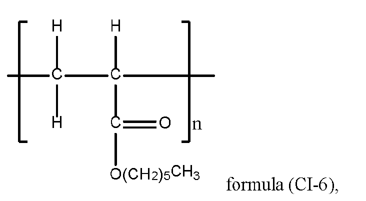

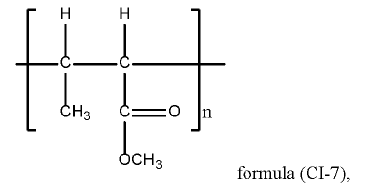

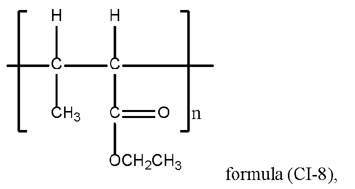

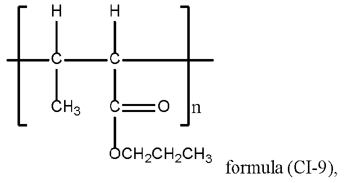

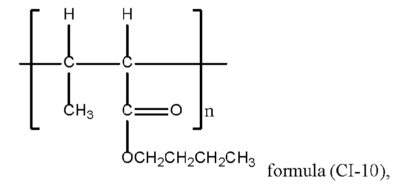

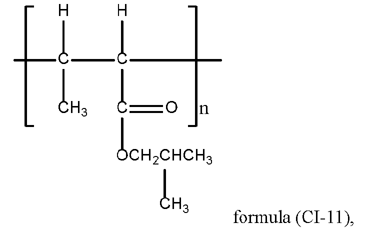

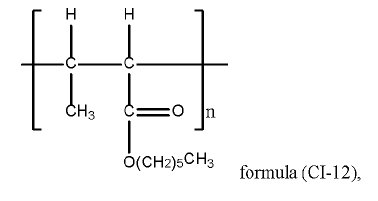

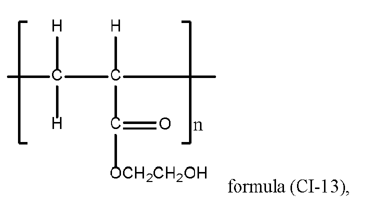

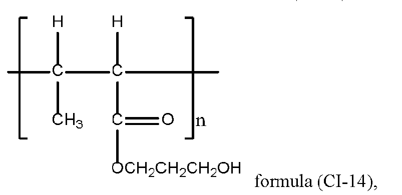

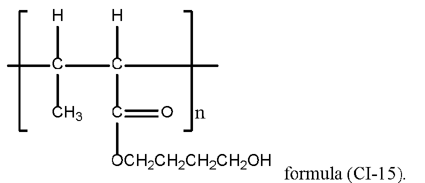

In some embodiments, the ester polymer includes a compound represented by formula (CII), 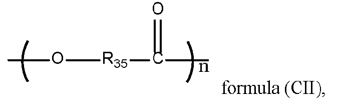 where in formula (CII), R₃₅ includes substituted or unsubstituted methylene.

Optionally, R₃₅ includes substituted or unsubstituted C1-C10 methylene.

Optionally, R₃₅ includes substituted or unsubstituted C2-C6 methylene.

Optionally, R₃₅ includes substituted or unsubstituted C2-C4 methylene.

For example, the ester polymer includes at least one of a compound represented by formula (CII-1) to a compound represented by formula (CII-5),

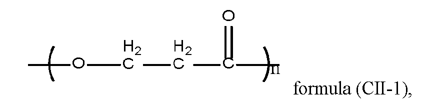

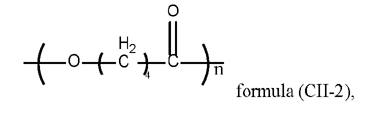

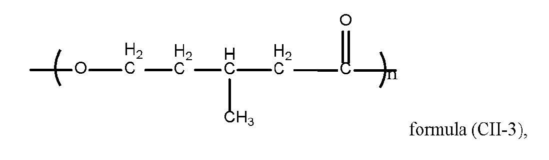

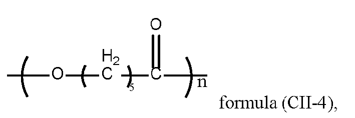

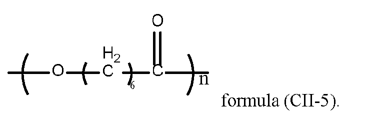

In some embodiments, the ester polymer includes a compound represented by formula (CIII), 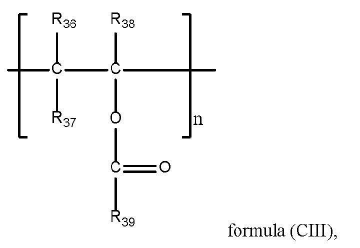
where in formula (CIII), R₃₆, R₃₇, and R₃₈ each independently include a hydrogen atom or substituted or unsubstituted C1-C8 alkyl; and R₃₉ includes substituted or unsubstituted C1-C8 alkyl; and
optionally, R₃₆, R₃₇, and R₃₈ each independently include a hydrogen atom or substituted or unsubstituted C1-C4 alkyl.

For example, the ester polymer includes at least one of a compound represented by formula (CIII-1) to a compound represented by formula (CIII-5),

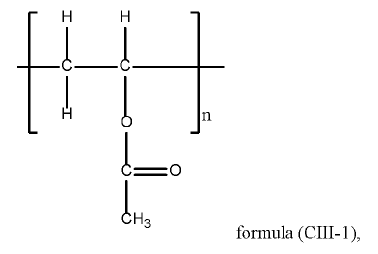

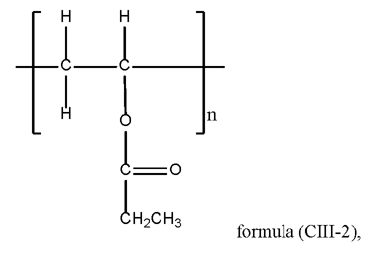

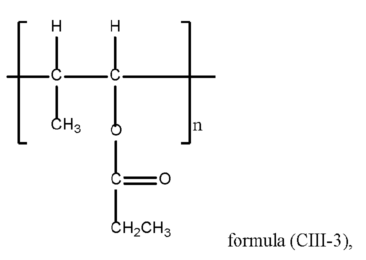

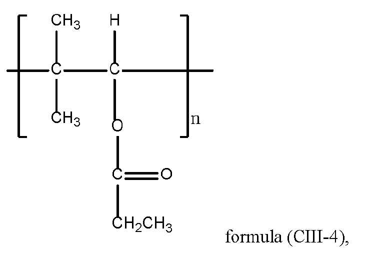

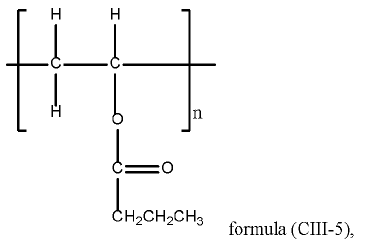

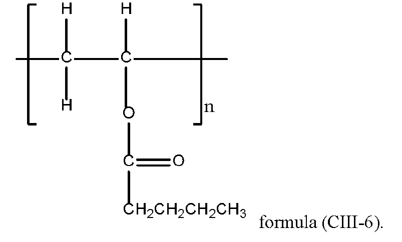

The above polymers are only examples of the structural groups of the main molecular chain. In the embodiments of the present application, the lyophilic polymer may also be obtained by copolymerizing the above structural groups with a small amount of other types of structural groups (compounds such as olefin compounds, ester monomers, nitrile monomers such as acrylonitrile, amide monomers such as acrylamide, or compounds such as acrylic acid).

When the above groups are substituted, the substituent may include one or more of a cyano group (-CN), a nitro group, a sulfonic acid group, a sulfonyl group, an amide, a carboxyl group, an ester group, or a halogen atom.

In some embodiments, the degree of polymerization n of the ester polymer is a positive integer selected from 800 to 20000, for example, 800, 1000, 1500, 2000, 3000, 4000, 5000, 6000, 7000, 8000, 9000, 10000, 11000, 12000, 13000, 14000, 15000, 16000, 17000, 18000, 19000, 20000, or a range composed of any two of the above values.

In some embodiments, the degree of polymerization n of the ester polymer is a positive integer selected from 1000 to 15000.

In some embodiments, the molecular weight of the lyophilic polymer is from 2×10⁵ g/mol to 1.2×10⁶ g/mol.

For example, the molecular weight of the lyophilic polymer may be 2×10⁵ g/mol, 5×10⁵ g/mol, 8×10⁵ g/mol, 1×10⁶ g/mol, 1.2×10⁶ g/mol, or a range composed of any two of the above values.

### Aldehyde-ketone polymer

In some embodiments, the lyophilic polymer includes an aldehyde-ketone polymer.

In some embodiments, the aldehyde-ketone polymer is made into a sheet-like structure, a storage modulus G' - loss modulus G" curve of the sheet-like structure is obtained by subjecting it to dynamic frequency sweep testing at (Tₘ₄ + 20)°C, and a slope of the storage modulus G' - loss modulus G" curve is K₃, where 0.8 ≤ K₃ < ∞, and Tₘ₄°C represents the melting temperature of the aldehyde-ketone polymer.

Specifically, the preparation process of the sheet-like structure is the same as that for the ether polymer and is not repeated here. When the aldehyde-ketone polymer of the present application satisfies the above range, it can further reduce molecular chain entanglement, facilitating the diffusion of solvent molecules in the electrolyte between the molecular chains. Additionally, the aldehyde-ketone polymer maintains a certain degree of molecular chain entanglement, capable of effectively storing the electrolyte, and improving the cycling performance of the battery cell.

In some embodiments, 0.8 ≤ K₃ ≤ 100; optionally, 0.8 ≤ K₃ ≤ 10. For example, K₃ may be 0.8, 0.85, 0.9, 1, 1.01, 1.1, 2, 5, 10, 15, 20, 30, 50, 100, 200, 500, 1000, 5000, 10000, or a range composed of any two of the above values.

In some embodiments, the glass transition temperature of the aldehyde-ketone polymer is T_{g4}°C, where -20 ≤ T_{g4} ≤ 35. For example, the glass transition temperature of the aldehyde-ketone polymer may be -20°C, -15°C, -10°C, -5°C, -0°C, 5°C, 10°C, 15°C, 20°C, 25°C, 30°C, 35°C, or a range composed of any two of the above values. The aldehyde-ketone polymer has certain mobility above the glass transition temperature, and therefore can buffer external energy through chain segment motion under external force, exhibiting certain flexibility. This can mitigate increased brittleness of the positive electrode plate caused by thick coating and serve as a buffer for the charge-discharge process of the positive electrode active material during cycling of the positive electrode plate, thereby reducing cycling swelling and improving cycling performance.

In some embodiments, the aldehyde-ketone polymer includes a compound represented by formula (DI), 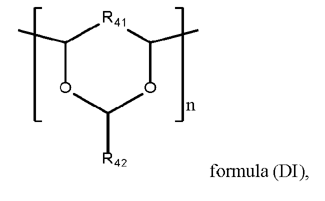 where in formula (DI), R₄₁ includes a single bond or substituted or unsubstituted C1-C6 methylene; and R₄₂ includes a hydrogen atom or substituted or unsubstituted C1-C6 alkyl.

Optionally, R₄₁ includes a single bond or substituted or unsubstituted C1-C2 methylene.

Optionally, R₄₂ includes a hydrogen atom or substituted or unsubstituted C1-C3 alkyl.

In the embodiments of the present application, a single bond means that the group is absent, and the atoms on two sides of the group are connected by a single bond. For example, when R₄₁ is a single bond, it means that the carbon atoms on both sides of R₄₁ are connected by a single bond.

For example, the aldehyde-ketone polymer includes at least one of a compound represented by formula (DI-1) to a compound represented by formula (DI-6),

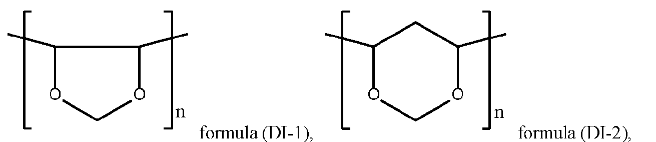

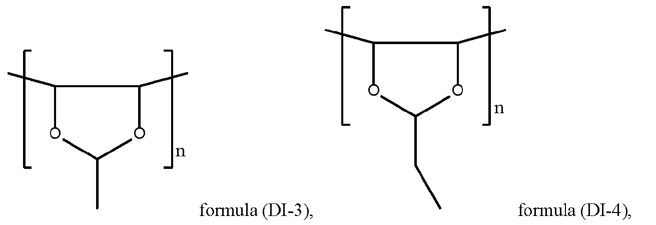

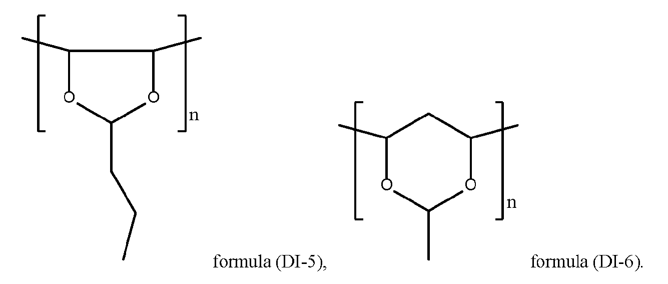

For example, the aldehyde-ketone polymer includes a compound represented by formula (DII), 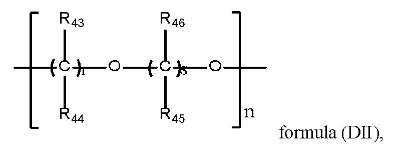 where in formula (DII), R₄₃ to R₄₆ each independently include a hydrogen atom, a hydroxyl group, substituted or unsubstituted C1-C3 alkyl, substituted or unsubstituted C1-C3 hydroxyalkyl, or substituted or unsubstituted C1-C3 alkoxy; r and s are each independently an integer selected from 0 to 5, and at least one of r and s is selected from a positive integer.

Optionally, R₄₃ to R₄₆ each independently include a hydrogen atom, a hydroxyl group, substituted or unsubstituted C1-C3 alkyl, substituted or unsubstituted C1-C2 hydroxyalkyl, or substituted or unsubstituted C1-C2 alkoxy.

In some embodiments, the aldehyde-ketone polymer includes at least one of a compound represented by formula (DII-1) to a compound represented by formula (DII-4),

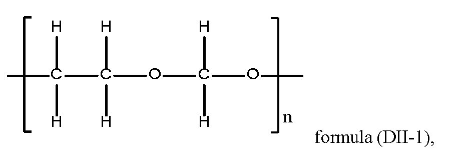

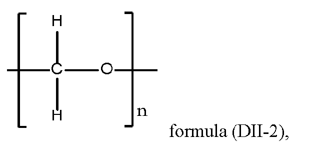

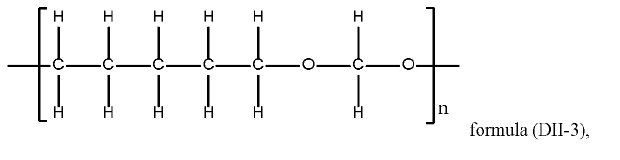

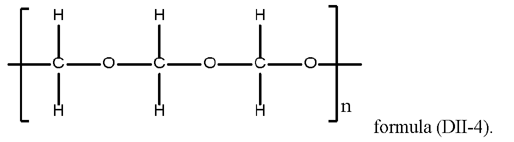

The above polymers are only examples of the structural groups of the main molecular chain. In the embodiments of the present application, the polymer may also be obtained by copolymerizing the above structural groups with other types of structural groups (for example, olefin compounds, enol compounds, or acrylonitrile compounds).

When the above groups are substituted, the substituent may include one or more of a cyano group (-CN), a nitro group, a sulfonic acid group, a sulfonyl group, an amide, a carboxyl group, an ester group, or a halogen atom. The halogen atom may include at least one of a fluorine atom, a bromine atom, or a chlorine atom.

In some embodiments, the degree of polymerization n of the aldehyde-ketone polymer is a positive integer selected from 500 to 15000, for example, 500, 800, 1000, 1500, 2000, 3000, 4000, 5000, 6000, 7000, 8000, 9000, 10000, 11000, 12000, 13000, 14000, 15000, or a range composed of any two of the above values.

Optionally, the degree of polymerization n of the aldehyde-ketone polymer is a positive integer selected from 500 to 10000.

In some embodiments, the molecular weight of the aldehyde-ketone polymer is from 1.2×10⁵ g/mol to 1.2×10⁶ g/mol.

For example, the molecular weight of the aldehyde-ketone polymer may be 1.2×10⁵ g/mol, 2×10⁵ g/mol, 5×10⁵ g/mol, 8×10⁵ g/mol, 1×10⁶ g/mol, 1.0×10⁶ g/mol, 1.2×10⁶ g/mol, or a range composed of any two of the above values.

In some embodiments, the lyophilic polymer may be a homopolymer or a copolymer. In addition to the monomers mentioned above that can form fluorinated polymers, ether polymers, ester polymers, and aldehyde-ketone polymers, monomers of the lyophilic polymer may also include olefin monomers and the like.

The relevant parameters of the lyophilic polymer in the embodiments of the present application can be tested using the following methods:

The groups of the lyophilic polymer in the embodiments of the present application can be tested using infrared spectroscopy IR. Specifically, the lyophilic polymer is tested using a Thermo Nicolet Nexus 670 Attenuated Total Reflectance Fourier Transform Infrared Spectrometer (FTIR-ATR), and the test is conducted in accordance with standard GB/T6040-2002, with a test range: ATR method 600-4000 cm⁻¹; repeatability: ±2 cm⁻¹; resolution: better than 4 cm⁻¹; transmission depth 0.2-0.6 µm.

The structure of the lyophilic polymer in the embodiments of the present application can be tested using nuclear magnetic resonance NMR. Specifically, 1H NMR and 13C NMR are performed on a Varian Mercury Plus-400 nuclear magnetic resonance spectrometer, with a test temperature of 20°C, TMS as the internal standard, CDCl₃ as the solvent, and a proton resonance frequency of 400 MHz.

The types of polymer monomers in the lyophilic polymer (especially for monomers with a low proportion in the polymer) in the embodiments of the present application can be tested using pyrolysis-gas chromatography-mass spectrometry. The specific test procedure is as follows: 0.5 mg of the sample is accurately weighed and placed in a sample cup, fixed to the injection rod, and loaded into a pyrolyzer installed near the GC (gas chromatography) injection port. After the pyrolyzer reaches the set temperature, the injection button is pressed, and the sample cup rapidly falls into the pyrolyzer furnace core via free fall. In an inert gas N₂ atmosphere, volatile components are instantly vaporized, carried by the carrier gas into the gas chromatography column for separation, and finally detected by a flame ionization detector FID or mass spectrometer MS, thereby obtaining a gas chromatogram or total ion current chromatogram.

The molecular weight of the lyophilic polymer in the embodiments of the present application has a meaning well-known in the art and can be measured using devices and methods commonly used in the art. It can be tested using gel permeation chromatography GPC in accordance with GB/T21863-2008. The specific test procedure is as follows: an appropriate amount of the sample to be tested is taken (the sample concentration should ensure 8%-12% shading), with 20 ml of deionized water added, and external ultrasound is performed for 5 min (53 kHz/120 W) to ensure complete dispersion of the sample. Then, the sample is measured in accordance with GB/T19077-2016/ISO 13320:2009 standards.

In some embodiments, the positive electrode current collector has two opposing surfaces in its thickness direction, and the positive electrode film layer may be disposed on either or both of the two opposing surfaces of the positive electrode current collector.

In some embodiments, the positive electrode current collector may be a metal foil or a composite current collector. As an example of a metal foil, aluminum foil or aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver, and silver alloy, and the polymer material base layer may include one or more of polypropylene (PP), polyethylene terephthalate (PET), polybutylene terephthalate (PBT), polystyrene (PS), and polyethylene (PE).

In some embodiments, the positive electrode film layer may optionally further include a positive electrode conductive agent. The embodiments of the present application do not impose particular restrictions on the type of positive electrode conductive agent. As an example, the positive electrode conductive agent includes one or more of superconducting carbon, conductive carbon black, conductive graphite, acetylene black, carbon black, Ketjen black, carbon dots, carbon nanotubes, graphene, and carbon nanofibers. In some embodiments, based on the total mass of the positive electrode film layer, the mass percentage content of the positive electrode conductive agent is below 5%.

In some embodiments, the positive electrode film layer may optionally further include a positive electrode binder. The embodiments of the present application do not impose particular restrictions on the type of positive electrode binder. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In some embodiments, based on the total mass of the positive electrode film layer, the mass percentage content of the positive electrode binder is below 5%. Compared to the crystallinity of the fluorinated polymer of the embodiments of the present application, the crystallinity of the positive electrode binder is higher.

The positive electrode film layer is typically formed by applying a positive electrode slurry on the positive electrode current collector, followed by drying and cold pressing. The positive electrode slurry is typically formed by dispersing the positive electrode active material, the lyophilic polymer, an optional conductive agent, an optional binder, and any other components in a solvent and stirring them to uniformity. The solvent may be N-methylpyrrolidone (NMP), but is not limited thereto. Certainly, the preparation of the positive electrode plate is not limited to the above method and may also adopt the preparation methods described earlier.

### Battery cell

According to a second aspect, the embodiments of the present application also provide a battery cell. The battery cell includes the positive electrode plate according to any embodiment of the first aspect of the present application, effectively enhancing the energy density, cycling performance, and power performance of the battery cell.

### Negative electrode plate

In some embodiments, an electrode assembly includes a negative electrode plate, where the negative electrode plate includes a negative electrode current collector and a negative electrode film layer disposed on at least one side of the negative electrode current collector, and the negative electrode film layer includes a negative electrode active material.

The negative electrode active material may include known negative electrode active materials for battery cells well known in the art. For example, the negative electrode active material may include, but is not limited to, at least one of natural graphite, artificial graphite, soft carbon, hard carbon, silicon-based materials, tin-based materials, and lithium titanate. The silicon-based materials may include at least one of elemental silicon, silicon oxide, silicon-carbon composite, silicon-nitrogen composite, and silicon alloy materials. The tin-based materials may include at least one of elemental tin, tin oxide, and tin alloy materials.

In some embodiments, the negative electrode current collector has two opposing surfaces in its thickness direction, and the negative electrode film layer is disposed on either or both of the two opposing surfaces of the negative electrode current collector.

In some embodiments, the negative electrode film layer may optionally further include a negative electrode conductive agent. The embodiments of the present application do not impose particular restrictions on the type of negative electrode conductive agent. As an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on the total mass of the negative electrode film layer, the mass percentage content of the negative electrode conductive agent is ≤ 5%.

In some embodiments, the negative electrode film layer may optionally further include a negative electrode binder. The embodiments of the present application do not impose particular restrictions on the type of negative electrode binder. As an example, the negative electrode binder may include at least one of styrene-butadiene rubber (SBR), water-soluble unsaturated resin SR-1B, aqueous acrylic resin (for example, polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS). In some embodiments, based on the total mass of the negative electrode film layer, the mass percentage content of the negative electrode binder is ≤ 5%.

In some embodiments, the negative electrode film layer may optionally further include other additives. As an example, other additives may include thickeners, such as sodium carboxymethyl cellulose (CMC), PTC thermistor materials, and the like. In some embodiments, based on the total mass of the negative electrode film layer, the mass percentage content of other additives is ≤ 2%.

In some embodiments, the negative electrode current collector may be a metal foil or a composite current collector. As an example of a metal foil, copper foil may be used. The composite current collector may include a polymer material base layer and a metal material layer formed on at least one surface of the polymer material base layer. As an example, the metal material may include at least one of copper, copper alloy, nickel, nickel alloy, titanium, titanium alloy, silver, and silver alloy. As an example, the polymer material base layer may include at least one of polypropylene (PP), polyethylene terephthalate (PET), polybutylene terephthalate (PBT), polystyrene (PS), and polyethylene (PE).

The negative electrode film layer is typically formed by applying a negative electrode slurry on the negative electrode current collector, followed by drying and cold pressing. The negative electrode slurry is typically formed by dispersing the negative electrode active material, an optional conductive agent, an optional binder, and other optional additives in a solvent and stirring them to uniformity. The solvent may be N-methylpyrrolidone (NMP) or deionized water, but is not limited thereto. Certainly, the preparation of the negative electrode plate is not limited to the above method and may also adopt the preparation methods described earlier.

The negative electrode plate does not exclude additional functional layers besides the negative electrode film layer. For example, in some embodiments, the negative electrode plate of the present application further includes a conductive undercoat layer (for example, composed of a conductive agent and a binder) disposed between the negative electrode current collector and the negative electrode film layer on the surface of the negative electrode current collector. In some other embodiments, the negative electrode plate of the present application further includes a protective layer covering the surface of the negative electrode film layer.

### [Separator]

In some embodiments, the battery cell includes a separator.

In some embodiments, the separator includes a substrate.

In some embodiments, the separator includes a substrate and a coating disposed on at least one surface of the substrate.

The embodiments of the present application do not impose particular restrictions on the material of the substrate, and any well-known substrate with good chemical and mechanical stability may be used, such as at least one of glass fiber, nonwoven fabric, polyethylene, polypropylene, and polyvinylidene fluoride. The substrate may be a single-layer film or a multilayer composite film. When the substrate is a multilayer composite film, the materials of each layer may be the same or different.

In some embodiments, the coating may further include a heat-resistant filler. Further, the heat-resistant filler may include at least one of inorganic particles and organic particles.

In some embodiments, the decomposition temperature of the heat-resistant filler may be 200°C or higher, whereby the heat-resistant filler may have good thermal stability and resistance to decomposition, further enhancing the heat resistance of the separator.

Inorganic particles have high thermal stability and resistance to decomposition. Optionally, inorganic particles include at least one of inorganic particles with a dielectric constant of 5 or higher, inorganic particles with ionic conductivity but not storing ions, and inorganic particles capable of undergoing electrochemical reactions.

Optionally, inorganic particles with a dielectric constant of 5 or higher include at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃ (abbreviated as PZT), Pb₁₋ₘLaₘZr₁₋ₙTiₙO₃ (abbreviated as PLZT, where 0 < m < 1, and 0 < n < 1), Pb(Mg₃Nb_{2/3})O₃-PbTiO₃ (abbreviated as PMN-PT), and their respective modified inorganic particles. Optionally, the modification method for each inorganic particle may be chemical modification and/or physical modification. Chemical modification methods include coupling agent modification (for example, using silane coupling agents, and titanate coupling agents), surfactant modification, polymer grafting modification, and the like. Physical modification methods may include mechanical dispersion, ultrasonic dispersion, high-energy treatment, and the like. Modification treatment can reduce the aggregation of inorganic particles, thereby enabling the formation of a more stable and uniform spatial network structure with nanocellulose. Additionally, selecting coupling agents, surface active materials, or polymers with specific functional groups to modify inorganic particles can also help improve the wettability of the coating to the electrolyte and enhance the bonding strength between the coating and the substrate.

Optionally, inorganic particles with ionic conductivity but not storing ions include at least one of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, where 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0 < x8 < 3, 0 < y8 < 3, 0 < z4 < 7. This can further enhance the ion transport properties of the separator.

Organic particles have good thermal stability and resistance to decomposition, thereby enhancing the heat resistance of the separator. Meanwhile, when the internal temperature of the battery cell reaches the melting point of the organic particles due to overcharging, thermal abuse, or the like, the organic particles can melt and be absorbed into the micropores of the substrate due to capillary action, acting to close pores and interrupt the circuit, thus contributing to ensuring high safety performance of the battery cell.

In some embodiments, organic particles include, but are not limited to, at least one of polyethylene particles, polypropylene particles, polystyrene particles, melamine resin particles, phenolic resin particles, polyester particles (for example, polyethylene terephthalate, polyethylene naphthalate, polybutylene terephthalate), polyimide particles, polyamideimide particles, polyaramid particles, polyphenylene sulfide particles, polysulfone particles, polyethersulfone particles, polyetheretherketone particles, polyaryletherketone particles, and copolymers of butyl acrylate and ethyl methacrylate (for example, cross-linked polymers of butyl acrylate and ethyl methacrylate).

In some embodiments, the coating further includes a binder. The present application does not impose particular restrictions on the type of binder, and any well-known material with good adhesion may be used. As an example, the binder includes at least one of aqueous acrylic resin (for example, homopolymers of acrylic acid, methacrylic acid, sodium acrylate monomers, or copolymers with other comonomers), polyvinyl alcohol, isobutylene-maleic anhydride copolymer, and polyacrylamide.

Optionally, the content of the binder in the coating is < 30%, based on the mass of the coating.

### [Electrolyte]

In some embodiments, the battery cell includes an electrolyte.

During the charge-discharge process of the battery cell, active ions intercalate and deintercalate back and forth between the positive electrode plate and the negative electrode plate, and the electrolyte serves to conduct active ions between the positive electrode plate and the negative electrode plate. The present application does not impose particular restrictions on the type of electrolyte, which may be selected based on actual needs.

The electrolyte includes an electrolyte salt and a solvent. The types of electrolyte salt and solvent are not specifically restricted and may be selected based on actual needs.

As an example, the electrolyte salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro(bisoxalato)phosphate (LiDFOP), and lithium tetrafluoro(oxalato)phosphate (LiTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolyte may optionally further include an additive. For example, the additive may include a negative electrode film-forming additive, a positive electrode film-forming additive, and an additive that can improve certain battery performance, such as an additive that improves battery overcharge performance, an additive that improves battery high-temperature performance, or an additive that improves battery low-temperature power performance.

In some embodiments, the positive electrode plate, separator, and negative electrode plate may be made into an electrode assembly through a winding process and/or a lamination process.

In some embodiments, the battery cell may include an outer package. The outer package may be used to encapsulate the above electrode assembly and electrolyte.

In some embodiments, the outer package of the battery cell may be a hard shell, such as a hard plastic shell, aluminum shell, or steel shell. The outer package of the battery cell may also be a soft pouch, such as a pouch-type soft package. The material of the soft pouch may be plastic, such as at least one of polypropylene (PP), polybutylene terephthalate (PBT), and polybutylene succinate (PBS).

The present application does not impose particular restrictions on the shape of the battery cell, which may be cylindrical, square, or any other shape. FIG. 2 shows a battery cell 5 with a square structure as an example.

In some embodiments, as shown in FIG. 2 and FIG. 3 the outer package may include a housing 51 and a cover plate 53. The housing 51 may include a bottom plate and side plates connected to the bottom plate, with the bottom plate and side plates enclosing a receiving cavity. The housing 51 has an opening communicating with the receiving cavity, and the cover plate 53 is used to cover the opening to seal the receiving cavity. The positive electrode plate, negative electrode plate, and separator may be made into an electrode assembly 52 through a winding process or a lamination process. The electrode assembly 52 is encapsulated in the receiving cavity. The electrolyte is infiltrated into the electrode assembly 52. The number of electrode assemblies 52 included in the battery cell 5 may be one or more, adjustable based on requirements.

The preparation method of the battery cell of the present application is well-known. In some embodiments, the positive electrode plate, separator, negative electrode plate, and electrolyte may be assembled to form a battery cell. As an example, the positive electrode plate, separator, and negative electrode plate may be made into an electrode assembly through a winding process or a lamination process. The electrode assembly was placed in an outer package, dried, injected with electrolyte, and subjected to processes such as vacuum encapsulation, standing, formation, and shaping to obtain a battery cell.

In some embodiments of the present application, the battery cells according to the present application may be assembled into a battery module, and the number of battery cells included in the battery module may be one or more, with the specific number adjustable based on the application and capacity of the battery module.

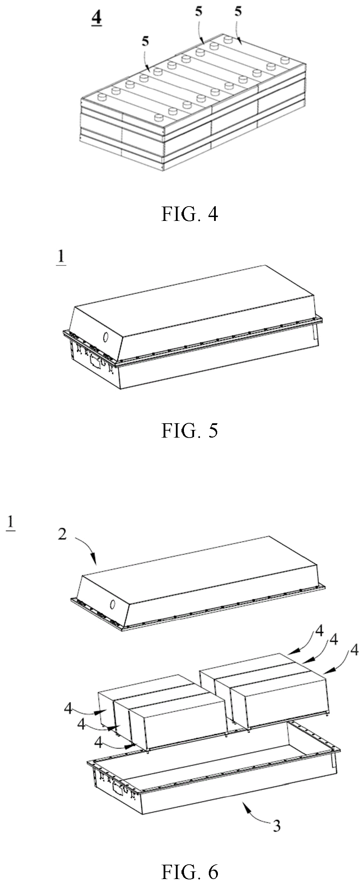

FIG. 4 is a schematic diagram of a battery module 4 as an example. As shown in FIG. 4, in the battery module 4, multiple battery cells 5 may be sequentially arranged along the length direction of the battery module 4. Certainly, they may also be arranged in any other manner. Further, the multiple battery cells 5 may be fixed by fasteners.

Optionally, the battery module 4 may further include a casing with a receiving space, and the multiple battery cells 5 are accommodated in the receiving space.

In some embodiments, the above battery module may further be assembled into a battery pack, and the number of battery modules included in the battery pack may be adjusted based on the application and capacity of the battery pack.

The battery module 4 and battery pack may both serve as specific examples of the battery in the embodiments of the present application.

FIG. 5 and FIG. 6 are schematic diagrams of a battery pack 1 as an example. As shown in FIG. 5 and FIG. 6, the battery pack 1 may include a battery case and multiple battery modules 4 disposed in the battery case. The battery case includes an upper case 2 and a lower case 3, with the upper case 2 used to cover the lower case 3, forming a closed space for accommodating the battery modules 4. The multiple battery modules 4 may be arranged in the battery case in any manner.

### Electric apparatus

According to a third aspect, the present application provides an electric apparatus. The electric apparatus includes at least one of the battery cell, battery module, and battery pack of the present application. The battery cell, battery module, and battery pack may be used as a power source for the electric apparatus or as an energy storage unit for the electric apparatus. The electric apparatus may include, but is not limited to, mobile devices (for example, mobile phones, and laptops), electric vehicles (for example, battery electric vehicles, hybrid electric vehicles, plug-in hybrid electric vehicles, electric bicycles, electric scooters, electric golf carts, and electric trucks), electric trains, ships, satellites, energy storage systems, and the like. In some embodiments, the battery cell includes an electrolyte injection hole for injecting the electrolyte. When the battery cell is used in an electric apparatus, the electrolyte injection hole is located at the bottom of the battery cell in the vertical direction. Since the amount of free electrolyte in the battery cell is very small or even absent, placing the electrolyte injection hole at the bottom of the battery cell in the vertical direction can also improve the reliability of the battery cell, thereby enhancing the reliability of the electric apparatus.

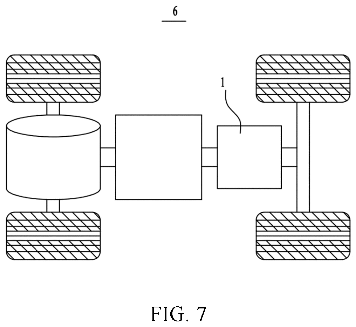

The electric apparatus may select a battery cell, battery module, or battery pack based on its usage requirements. FIG. 7 is a schematic diagram of an electric apparatus as an example. The electric apparatus 6 is a battery electric vehicle, hybrid electric vehicle, plug-in hybrid electric vehicle, or the like. To meet the high power and high energy density requirements of the electric apparatus, a battery pack 1 or battery module may be used. As another example, the electric apparatus may be a mobile phone, tablet, laptop, or the like. Such electric apparatuses typically require thin and light designs, and a battery cell may be used as the power source.

### Examples

Hereinafter, examples of the present application are described. The examples described below are exemplary and intended only to explain the present application, and should not be construed as limiting the present application. Where specific techniques or conditions are not specified in the examples, they are carried out according to techniques or conditions described in the literature in the art or according to product specifications. Reagents or instruments used without indicating the manufacturer are all conventional products commercially available.

### Example 1: Preparation of lithium-ion battery

### (1) Preparation of positive electrode plate:

A lyophilic polymer, a positive electrode active material, a conductive agent carbon black, and a binder polyvinylidene fluoride (PVDF) were mixed in a mass ratio of 0.2:97.3:2:0.5 in N-methylpyrrolidone (NMP) to form a positive electrode slurry. The positive electrode slurry was applied on an aluminum foil current collector, dried at 85°C, cold-pressed, then cut, slit, and dried under vacuum at 85°C for 4 h to form a positive electrode plate. The crystallinity of the binder polyvinylidene fluoride (PVDF) was 48%.

### (2) Preparation of negative electrode plate:

A negative electrode active material artificial graphite, a conductive agent carbon black, a binder styrene-butadiene rubber (SBR), and a thickener sodium carboxymethyl cellulose (CMC) were mixed in a weight ratio of 95:3:1:1 in deionized water to form a negative electrode slurry. The negative electrode slurry was applied on a copper foil current collector, dried at 85°C, cold-pressed, then cut, slit, and dried under vacuum at 120°C for 12 h to form a negative electrode plate.

### (3) Preparation of electrolyte:

The electrolyte includes a non-aqueous organic solvent and a lithium salt, the non-aqueous organic solvent including ethylene carbonate EC and ethyl methyl carbonate (EMC) (volume ratio 3:7), and the lithium salt including 1 mol/L LiPF₆.

### (4) Preparation of lithium-ion battery:

A polyethylene film (PE) was used as a separator. The positive electrode plate, separator, and negative electrode plate were stacked in order, with the separator placed between the positive electrode plate and negative electrode plate for separation, and then wound to obtain an electrode assembly. The electrode assembly was placed in an outer package shell, dried, injected with electrolyte, and subjected to vacuum sealing, standing, formation, shaping, and other processes to obtain a lithium-ion battery.

### Examples 2 to 6

Lithium-ion batteries were prepared using a method similar to Example 1. Different from Example 1, Examples 2 to 6 adjusted the types of lyophilic polymers.

### Examples 7 to 10

Lithium-ion batteries were prepared using a method similar to Example 1. Different from Example 1, Examples 7 to 10 adjusted the amounts of lyophilic polymers used.

### Examples 11 to 15

Lithium-ion batteries were prepared using a method similar to Example 1. Different from Example 1, Examples 11 to 15 adjusted the types of active materials.

### Comparative Examples 1 and 3

A lithium-ion battery was prepared using a method similar to Example 1. Different from Example 1, Comparative Example 1 did not use a lyophilic polymer.

### (1) Preparation of positive electrode plate:

A positive electrode active material, a conductive agent carbon black, and a binder polyvinylidene fluoride (PVDF) were mixed in N-methylpyrrolidone (NMP) to form a positive electrode slurry. The mass ratio of the positive electrode active material, conductive carbon black, and PVDF in the positive electrode slurry was 97.5:2:0.5. The positive electrode slurry was applied on an aluminum foil current collector, dried at 85 °C, cold-pressed, then cut, slit, and dried under vacuum at 85 °C for 4 h to form a positive electrode plate. A crystallinity of the binder polyvinylidene fluoride (PVDF) was 48%.

### Comparative Examples 2 and 4

Lithium-ion batteries were prepared using a method similar to that in Example 1. Different from Example 1, Comparative Examples 2 and 4 adjusted the types of polymers.

### Examples 16 and 17

Lithium-ion batteries were prepared using a method similar to that in Example 1. Different from Example 1, the positive electrode film layers in Examples 16 and 17 adopted double-layer coating.

### Test section

### 1. Test for capacity retention rate of lithium-ion battery

The lithium-ion battery prepared in each example and comparative example was charged at a constant current of 0.5C to V1 in a room temperature environment, left standing for 30 min, and then discharged at 0.5C to V2. The resulting capacity was recorded as an initial capacity C0. The above steps were repeated for the same battery, and a discharge capacity Cn of the battery after the nth cycle was recorded, with a capacity retention rate Pn of battery after each cycle = Cn/C0 × 100%. The 2000 point values P1, P2, ..., P2000 were used as the ordinate, and the corresponding cycle numbers were used as the abscissa, to obtain a scatter plot of capacity retention rate versus cycle numbers of the battery. V1 was an upper voltage limit of the battery, and V2 was a lower usage limit of the battery.

During this test, the first cycle corresponds to n=1, the second cycle corresponds to n=2, ..., and the 2000th cycle corresponds to n=2000. For example, the capacity retention rate data corresponding to the battery in Example 1 in Table 1 are data measured after 2000 cycles under the above test conditions, that is, the value of P2000. The test process for Comparative Example 1 and other examples is the same as above.

The determination of V1 and V2 in the above test procedure is based on the type of the positive electrode active material of the battery:

For a positive electrode active material of LiFePO₄, V1 = 2.0 V, and V2 = 3.65 V.

For positive electrode active materials of LiNi_{0.5}Co_{0.2}Mn_{0.3}O₂, LiNi_{0.8}Co_{0.1}Mn_{0.1}O₂, and LiNi_{0.9}Co_{0.05}Mn_{0.05}O₂, V1 = 2.8 V, and V2 = 4.25 V.

For positive electrode active materials of LiMn_{0.5}Fe_{0.5}PO₄, and LiMn_{0.4}Fe_{0.6}PO₄, V1 = 2.0 V, and V2 = 4.1 V.

### 2. Energy density of battery cell

In the embodiments of the present application, the energy density of the battery cell has a meaning well-known in the art, specifically referring to the weight energy transferred during each charge/discharge cycle, typically expressed in units of Wh/kg. In calculating the energy density, only the mass of the film layer in the electrode plate may be considered, or the mass of the battery cell may be considered. That is, in addition to the mass of the film layer, the mass of other components is considered, where the other components include all components in the battery cell except for the film layer. For example, the other components may include the positive electrode current collector, negative electrode current collector, separator, electrolyte, electrode leads, insulating tape, and aluminum shell. In the embodiments of the present application, the mass of the battery cell is considered in calculating the energy density.

The energy density of the battery cell in the embodiments of the present application may be tested using known devices and methods in the art in the art. For example, after the battery cell is shipped, it is charged at a constant current of 1/3C to V1, then charged at a constant voltage to 0.05C, left standing for 30 min, and discharged at 1/3C to V2. The discharge capacity D0 is recorded, a mass M0 of the battery cell is weighed, and the energy density of the battery cell is D0/M0. Here, V1 is an upper voltage limit of the battery, and V2 is a lower usage limit of the battery, with specific values as described above.

### Test results

The test results are shown in Table 1.

**Table 1**

| No. | Monomer | Slope K | Glass transition temperature Tg (°C) | Crystallinity Xc | Melting temperature Tₘ (°C) |
|---|---|---|---|---|---|
| Lyophilic polymer A | 85% vinylidene fluoride + 15% perfluoropropylene | / | 15 | 12% | 120 |
| Lyophilic polymer B | 85% vinyl acetate + 15% ethylene | 1.5 | 0 | / | / |
| Lyophilic polymer C | 88% vinyl ethyl ether + 12% vinyl acetate | 1.3 | 0 | / | / |
| Lyophilic polymer D | 25% PVA polyvinyl alcohol + 75% formaldehyde | 1.2 | 0 | / | / |
| Lyophilic polymer E | 75% vinylidene fluoride + 20% perfluoropropylene + 5% sulfonic acid modified vinylidene fluoride | / | 10 | 8% | 110 |
| Lyophilic polymer F | 100% ethyl acrylate | 1.5 | 10 | / | / |
| Comparative Polymer H | Polyvinylidene fluoride | / | 30 | 48% | 155 |

In monomer in Table 1, 85% vinylidene fluoride + 15% perfluoropropylene means based on a total mass of the monomer, a mass content of the vinylidene fluoride is 85%, and a mass content of the perfluoropropylene is 15%.

The crystallinity of "/" indicates that the polymer may be in an amorphous state with no obvious crystallinity.

The melting temperature of "/" indicates that the polymer may be in an amorphous state with no obvious melting temperature.

**Table 2**

| No. | Positive electrode plate | | | | Battery performance | |
|---|---|---|---|---|---|---|
| | Polymer | Lyophilic polymer content | Positive electrode active material | Coating weight (mg/1540.25 mm²) | Capacity retention rate | Energy density (Wh/kg) |
| Example 1 | Lyophilic polymer A | 0.20% | LiFePO₄ | 400 | 92.0% | 190 |
| Example 2 | Lyophilic polymer B | 0.20% | LiFePO₄ | 400 | 91.5% | 190 |
| Example 3 | Lyophilic polymer C | 0.20% | LiFePO₄ | 400 | 90.5% | 190 |
| Example 4 | Lyophilic polymer D | 0.20% | LiFePO₄ | 400 | 90.5% | 190 |
| Example 5 | Lyophilic polymer E | 0.20% | LiFePO₄ | 400 | 91.0% | 190 |
| Example 6 | Lyophilic polymer F | 0.20% | LiFePO₄ | 400 | 91.8% | 190 |
| Example 7 | Lyophilic polymer A | 0.10% | LiFePO₄ | 400 | 91.0% | 190 |
| Example 8 | Lyophilic polymer A | 0.05% | LiFePO₄ | 400 | 90.5% | 190 |
| Example 9 | Lyophilic polymer A | 1.00% | LiFePO₄ | 400 | 93.0% | 190 |
| Example 10 | Lyophilic polymer A | 5.00% | LiFePO₄ | 400 | 92.0% | 190 |
| Example 11 | Lyophilic polymer A | 0.20% | LiMn_{0.5}Fe_{0.5}PO₄ | 400 | 80.0% | 200 |
| Example 12 | Lyophilic polymer A | 0.20% | LiMn_{0.4}Fe_{0.6}PO₄ | 400 | 80.0% | 200 |
| Example 13 | Lyophilic polymer A | 0.20% | LiNi_{0.8}Co_{0.1}Mn_{0.1}O₂ | 300 | 80.0% | 275 |
| Example 14 | Lyophilic polymer A | 0.20% | LiNi_{0.9}Co_{0.05}Mn_{0.05}O₂ | 300 | 74.0% | 285 |
| Example 15 | Lyophilic polymer A | 0.20% | LiNi_{0.5}Co_{0.2}Mn_{0.3}O₂ | 300 | 83.0% | 260 |
| Comparative Example 1 | None | 0.00% | LiFePO₄ | 400 | 88.0% | 190 |
| Comparative Example 2 | Comparative polymer H | 0.20% | LiFePO₄ | 400 | 88.0% | 200 |
| Comparative Example 3 | None | 0.00% | LiNi_{0.8}Co_{0.1}Mn_{0.1}O₂ | 300 | 75.0% | 275 |
| Comparative Example 4 | Comparative polymer H | 0.00% | LiNi_{0.8}Co_{0.1}Mn_{0.1}O₂ | 300 | 75.0% | 285 |

In Table 2, the lyophilic polymer content of 0.2% in the positive electrode plate indicates that, based on the total mass of the positive electrode film layer, the mass content of the lyophilic polymer is 0.2%.

An addition amount of 0.00% for the lyophilic polymer in the positive electrode plate indicates that no lyophilic polymer is added to the positive electrode film layer.

From Table 2, it can be seen that the positive electrode plates of Comparative Examples 1 and 3 do not include a lyophilic polymer. During cycling of the lithium-ion battery, due to thick coating of the positive electrode plate in the lithium-ion battery, poor wetting of the positive electrode film layer easily occurs, leading to issues such as polarization, which deteriorates cycling performance and power performance of the lithium-ion battery.

Although Comparative Examples 2 and 4 include a polymer in the plate, the polymer has poor lyophilic capability, resulting in low liquid retention efficiency, and its high impedance deteriorates the battery's kinetic performance.

In the examples of the present application, adding the lyophilic polymer to the positive electrode plate, where the lyophilic polymer has high affinity with the electrolyte, enables an enhanced wetting speed of the electrolyte on the positive electrode film layer, mitigating polarization phenomena and interfacial side reactions in the positive electrode film layer, thereby improving cycle life. The lyophilic polymer is used to apply the electrolyte on surfaces of particles of the positive electrode active material, so as to form effective electrolyte retention sites on the surfaces of the particles of the positive electrode active material, thereby accelerating a migration speed of lithium ions and improving power performance of the battery cell.

**Table 3**

| No. | Positive electrode plate | | | | | Battery performance | |
|---|---|---|---|---|---|---|---|
| | Lyophilic polymer content of positive electrode film layer | First layer of positive electrode film layer (film layer close to positive electrode current collector) | | Second layer of positive electrode film layer (film layer far from positive electrode current collector) | | Capacity retention rate | Energy density (Wh/kg) |
| | | Lyophilic polymer content of first layer | Coating weight (mg/1540.25 mm²) | Lyophilic polymer content of second layer | Coating weight (mg/1540.25 mm²) | | |
| Example 16 | 0.20% | 0.10% | 200 | 0.30% | 200 | 92.1% | 190 |
| Example 17 | 0.20% | 0.28% | 220 | 0.12% | 180 | 80.5% | 270 |

In Table 3, Examples 16 and 17 both use the lyophilic polymer A in the positive electrode film layer.

The positive electrode active material in Example 16 includes LiFePO₄.

The positive electrode active material in Example 17 includes LiNi_{0.8}Co_{0.1}Mn_{0.1}O₂.

From Tables 2 and 3, it can be seen that, compared with the single-layer coating in Example 1, Examples 16 and 17 adopt double-layer coating, with the positive electrode film layer including the first layer and the second layer, better facilitating the formation of a high coating weight through thick coating. The coating weights of the first layer and the second layer are differentiated, and combined with differences in the mass contents of the lyophilic polymers, good electrolyte wetting effects in each layer are obtained, helping to improve the cycling performance and power performance of the lithium-ion battery.

Although illustrative embodiments have been shown and described, those skilled in the art should understand that the above embodiments are not to be construed as limiting the present application, and changes, substitutions, and modifications may be made to the embodiments without departing from the spirit, principles, and scope of the present application.

## Claims

1. A positive electrode plate comprising a positive electrode current collector and a positive electrode film layer disposed on at least one side of the positive electrode current collector, wherein the positive electrode film layer comprises a positive electrode active material and a lyophilic polymer, and a coating weight of the positive electrode film layer is ≥300 mg/1540.25 mm²; and
optionally, the coating weight of the positive electrode film layer ranges from 300 mg/1540.25 mm² to 500 mg/1540.25 mm².

2. The positive electrode plate according to claim 1, wherein the positive electrode active material comprises lithium-containing phosphate;
optionally, based on a total mass of the positive electrode active material, a mass content of the lithium-containing phosphate is ≥90%; and
further optionally, the coating weight of the positive electrode film layer is ≥400 mg/1540.25 mm², optionally ranging from 400 mg/1540.25 mm² to 500 mg/1540.25 mm².

3. The positive electrode plate according to claim 2, wherein the lithium-containing phosphate comprises at least one of lithium iron phosphate, lithium manganese phosphate, lithium manganese iron phosphate, lithium nickel phosphate, lithium cobalt phosphate, and their respective modified compounds.

4. The positive electrode plate according to claim 1, wherein the positive electrode active material comprises lithium-containing transition metal oxide;
optionally, based on a total mass of the positive electrode active material, a mass content of the lithium-containing transition metal oxide is ≥90%; and
further optionally, the coating weight of the positive electrode film layer is ≥300 mg/1540.25 mm², optionally ranging from 300 mg/1540.25 mm² to 500 mg/1540.25 mm².

5. The positive electrode plate according to claim 4, wherein the lithium-containing transition metal oxide comprises at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds.

6. The positive electrode plate according to any one of claims 1 to 5, wherein
based on a total mass of the positive electrode film layer, a mass content of the lyophilic polymer is ≤5%; and
optionally, the mass content of the lyophilic polymer is ≤1%.

7. The positive electrode plate according to any one of claims 1 to 6, wherein the positive electrode film layer comprises multiple sublayers, and in a direction from the positive electrode current collector to the positive electrode film layer, coating weights of the multiple sublayers decrease progressively;
optionally, the multiple sublayers comprise a first layer and a second layer, the first layer being disposed on a surface of the positive electrode current collector, and the second layer being located on a side of the first layer facing away from the positive electrode current collector, wherein a coating weight of the first layer is greater than a coating weight of the second layer; and
further optionally, a mass content of the lyophilic polymer in the first layer is greater than a mass content of the lyophilic polymer in the second layer.

8. The positive electrode plate according to any one of claims 1 to 7, wherein the lyophilic polymer comprises a fluorinated polymer, the fluorinated polymer having a crystallinity measured by differential scanning calorimetry and denoted as Xc₁%, wherein 0 < Xc₁ ≤ 28; wherein
a melting temperature of the fluorinated polymer is Tₘ₁°C, wherein 0 < Tₘ₁ ≤ 130;
further optionally, a glass transition temperature of the fluorinated polymer is T_{g1}°C, wherein -30 ≤ T_{g1} ≤ 40; and
further optionally, the fluorinated polymer comprises at least one of a compound represented by formula (AI) to a compound represented by formula (AIII): 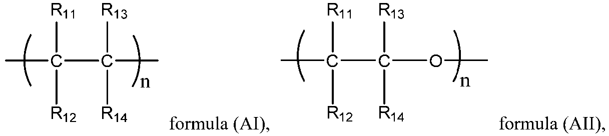
wherein in formula (AI) and formula (AII), R₁₁, R₁₂, R₁₃, and R₁₄ each independently comprise a hydrogen atom, a fluorine atom, a chlorine atom, a bromine atom, substituted or unsubstituted C1-C3 alkyl, or substituted or unsubstituted C1-C3 alkoxy, and at least one of R₁₁, R₁₂, R₁₃, and R₁₄ comprises a fluorine atom; 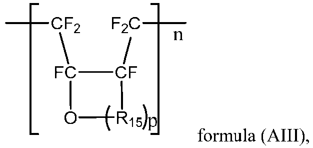
in formula (AIII), R₁₅ comprises a single bond or substituted or unsubstituted C1-C3 alkyl;
p is a positive integer selected from 1 to 3; and
n is a positive integer selected from 1000 to 30000.

9. The positive electrode plate according to any one of claims 1 to 8, wherein the lyophilic polymer comprises an ether polymer, the ether polymer is made into a sheet-like structure, a storage modulus G' - loss modulus G" curve of the sheet-like structure is obtained by subjecting it to dynamic frequency sweep testing at (Tₘ₂ + 20)°C, and a slope of the storage modulus G' - loss modulus G" curve is K₁, wherein 1 < K₁ < ∞, Tₘ₂°C represents the melting temperature of the ether polymer, optionally, 1 < K₁ ≤ 100, and further optionally, 1 < K₁ ≤ 10;
optionally, the glass transition temperature of the ether polymer is T_{g2}°C, wherein -20 ≤ T_{g2} ≤ 35; and
further optionally, the ether polymer comprises at least one of a compound represented by formula (BI) and a compound represented by formula (BII), 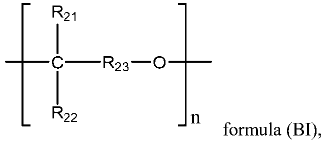
wherein in formula (BI), R₂₁ and R₂₂ each independently comprise a hydrogen atom, substituted or unsubstituted C1-C3 alkyl, or substituted or unsubstituted C1-C3 alkoxy; and R₂₃ comprises substituted or unsubstituted C1-C5 alkylene; 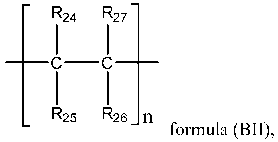
in formula (BII), R₂₄ to R₂₇ each independently comprise a hydrogen atom, substituted or unsubstituted C1-C3 alkyl, substituted or unsubstituted C1-C3 alkoxy, or an ether group, and at least one of R₂₄ to R₂₇ comprises substituted or unsubstituted C1-C3 alkoxy or an ether group; and
a degree of polymerization n of the ether polymer is a positive integer selected from 1500 to 25000.

10. The positive electrode plate according to any one of claims 1 to 9, wherein the lyophilic polymer comprises anthe ester polymer, the ester polymer is made into a sheet-like structure, a storage modulus G' - loss modulus G" curve of the sheet-like structure is obtained by subjecting it to dynamic frequency sweep testing at (Tₘ₃ + 20)°C, and a slope of the storage modulus G' - loss modulus G" curve is K₂, wherein 1 < K₂ < ∞, Tₘ₃°C represents the melting temperature of the ester polymer, optionally, 1 < K₂ ≤ 100, and further optionally, 1 < K₂ ≤ 10;
optionally, the glass transition temperature of the ester polymer is T_{g3}°C, wherein -20 ≤ T_{g3} ≤ 35; and
further optionally, the ester polymer comprises at least one of a compound represented by formula (CI) to a compound represented by formula (CIII), 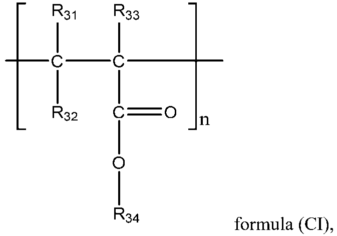
wherein in formula (CI), R₃₁, R₃₂, and R₃₃ each independently comprise a hydrogen atom or substituted or unsubstituted C1-C8 alkyl; and R₃₄ comprises substituted or unsubstituted C1-C8 alkyl or substituted or unsubstituted C1-C8 hydroxyalkyl; 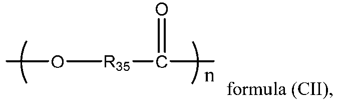
in formula (CII), R₃₅ comprises substituted or unsubstituted C2-C6 methylene; and optionally, R₃₅ independently comprises substituted or unsubstituted C2-C4 methylene; 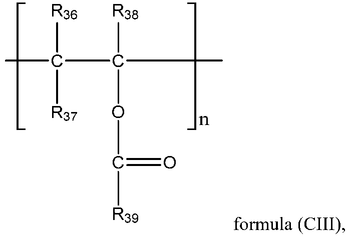
in formula (CIII), R₃₆, R₃₇, and R₃₈ each independently comprise a hydrogen atom or substituted or unsubstituted C1-C8 alkyl; and R₃₉ comprises substituted or unsubstituted C1-C8 alkyl;
optionally, R₃₆, R₃₇, and R₃₈ each independently comprise a hydrogen atom or substituted or unsubstituted C1-C4 alkyl; and
a degree of polymerization n of the ester polymer is a positive integer selected from 800 to 20000.

11. The positive electrode plate according to any one of claims 1 to 10, wherein the lyophilic polymer comprises an aldehyde-ketone polymer, the aldehyde-ketone polymer is made into a sheet-like structure, a storage modulus G' - loss modulus G" curve of the sheet-like structure is obtained by subjecting it to dynamic frequency sweep testing at (Tₘ₄ + 20)°C, a slope of the storage modulus G' - loss modulus G" curve is K₃, wherein 0.8 ≤ K₃ < ∞, Tₘ₄°C represents the melting temperature of the aldehyde-ketone polymer, optionally, 0.8 ≤ K₃ ≤ 100, and further optionally, 0.8 ≤ K₃ ≤ 10;
optionally, the glass transition temperature of the aldehyde-ketone polymer is T_{g4}°C, wherein -20 ≤ T_{g4} ≤ 35; and
further optionally, the aldehyde-ketone polymer comprises at least one of a compound represented by formula (DI) and a compound represented by formula (DII), 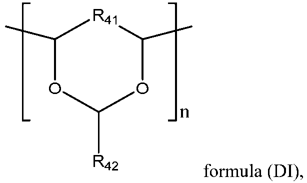
wherein in formula (DI), R₄₁ comprises a single bond or substituted or unsubstituted C1-C6 methylene; and R₄₂ comprises a hydrogen atom or substituted or unsubstituted C1-C6 alkyl; 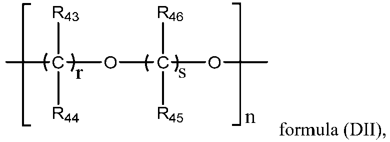
in formula (DII), R₄₃ to R₄₆ each independently comprise a hydrogen atom, a hydroxyl group, substituted or unsubstituted C1-C3 alkyl, substituted or unsubstituted C1-C3 hydroxyalkyl, or substituted or unsubstituted C1-C3 alkoxy;
r and s are each independently an integer selected from 0 to 5, and at least one of r and s is selected from a positive integer; and
a degree of polymerization n of the aldehyde-ketone polymer is a positive integer selected from 500 to 15000.

12. The positive electrode plate according to any one of claims 1 to 11, wherein a molecular weight of the lyophilic polymer ranges from 2.0×10⁵ g/mol to 1.2×10⁶ g/mol.

13. A battery comprising the positive electrode plate according to any one of claims 1 to 12.

14. An electric apparatus comprising the battery according to claim 13.
